# EUROPEAN PATENT APPLICATION

(11) **EP 4 443 781 A1**
(43) Date of publication of application: **09.10.2024**
(21) Application number: 22914595.8
(22) Date of filing: 24.12.2022
(51) Int. Cl.: H04L 1/00

(54) **COMMUNICATION METHOD AND DEVICE**

(30) Priority: 30.12.2021 CN 202111651774
(71) Applicant: Huawei Technologies Co., Ltd., Shenzhen, Guangdong 518129 (CN)
(72) Inventor: FAN, Qiang, Shenzhen, Guangdong 518129 (CN)
(74) Representative: Goddar, Heinz J.
(86) International application number: PCT/CN2022/141714
(87) International publication number: WO 2023/125341

(57) **Abstract**

This application relates to the field of communication technologies, and discloses a communication method and apparatus. The method includes: A first communication apparatus obtains an original data packet at a first protocol layer, where the original data packet corresponds to a first sequence number, and the original data packet is from a first protocol data unit at a second protocol layer. The first communication apparatus performs network coding on the original data packet at the first protocol layer to obtain K encoded data packets, where each encoded data packet of the K encoded data packets corresponds to one index value, and K is a positive integer. According to the foregoing method, the first communication apparatus can avoid unnecessary retransmission and waiting for a redundant encoded packet, thereby improving resource utilization.

## Description

### TECHNICAL FIELD

This application relates to the field of communication technologies, and in particular, to a communication method and apparatus.

### BACKGROUND

In a wireless communication network, a network coding technology provides a transmission mechanism that considers both a delay and spectral efficiency. In the network coding technology, a transmitting end encodes a plurality of original data packets to obtain and send encoded data packets, and sends indication information such as a coding coefficient corresponding to the encoded data packet. A receiving end can decode the encoded data packet based on the coding coefficient, to obtain the original data packet. A system can maximize a throughput of an entire network and effectively improve transmission performance of a wireless communication system through network coding.

However, in a radio channel environment, some encoded packets received by the receiving end may be incorrect due to factors such as attenuation caused by channel noise/mobility or interference caused by another user. However, for a group of encoded blocks of network coding, if a quantity L of correctly received encoded packets is not less than a quantity N of original data packets, and a rank of a matrix including coding coefficient vectors carried in headers of the L encoded packets is N (N is the quantity of original data packets), the receiving end can still obtain the N original data packets through decoding. However, for some encoded packets that are not correctly received, according to the conventional technology, unnecessary automatic repeat request (automatic repeat request, ARQ) retransmission is triggered, causing a waste of resources. In addition, an upper layer of a protocol further needs to maintain a window and a timer, to wait for receiving of the encoded packet. This may easily cause a problem of high implementation complexity. Therefore, for the network coding technology, how to reduce a delay and avoid a waste of spectrum resources caused by retransmission is an urgent problem to be resolved.

### SUMMARY

This application provides a communication method and apparatus, to effectively improve transmission performance of a wireless communication system.

According to a first aspect, an embodiment of this application provides a data transmission method, where the method may be performed by a terminal or a network device, or may be performed by a component (for example, a processor, a chip, or a chip system) of the terminal or the network device, and the method includes: obtaining an original data packet at a first protocol layer, where the original data packet corresponds to a first sequence number, and the original data packet is from a first protocol data unit at a second protocol layer; and performing network coding on the original data packet at the first protocol layer to obtain K encoded data packets, where each encoded data packet of the K encoded data packets corresponds to one index value, and K is a positive integer. The first sequence number corresponding to the original data packet is allocated, so that when decoding succeeds, a receiving end does not need to wait for receiving encoded data packets corresponding to the first sequence number, thereby avoiding unnecessary automatic repeat request (automatic repeat request, ARQ) retransmission and waiting of radio link control (radio link control, RLC), and improving resource utilization.

Optionally, the original data packet may be a data packet obtained after an RLC layer performs aggregation (also referred to as cascading) and/or segmentation based on a service data unit (service data unit, SDU) or a protocol data unit (protocol data unit, PDU) of a PDCP layer, or may be an SDU or a PDU. The first sequence number corresponding to the original data packet may be a sequence number allocated by the RLC layer to the original data packet after the RLC layer obtains the original data packet. Different original data packets may be distinguished by using different sequence numbers.

Optionally, a transmitting end performs encoding processing on the original data packet at the RLC layer, to generate a group of K encoded data packets. A manner of generating the encoded data packet, namely, an encoding manner, includes one or more of code types such as maximum distance separable (Maximum Distance Separable, MDS) code, random linear network coding (random linear network coding, RLNC) code, linear network coding (linear network coding, LNC) code, deterministic linear network coding, batched sparse (Batched Sparse, BATS) code, block (block) code, LT (Luby Transform) code, rateless (rateless) code, and RS (Reed-Solomon) code. A specific code type to be used may be determined based on a system design requirement, a protocol specification, or a configuration. Details are not described herein. For example, the RLC layer may use an RLNC mechanism. First, the original data packet is equally divided into M code blocks, and all the M code blocks may be considered as segment packets corresponding to the first sequence number. Then, random linear coding is performed on the M code blocks to generate the K encoded data packets, where values of M and K may be preconfigured by a network, or may be determined by an RLC entity of the transmitting end. The encoded data packets are obtained by performing network coding on the original data packet, so that a problem of a burst error occurring on a channel can be resolved, thereby ensuring transmission reliability.

Optionally, each encoded data packet of the K encoded data packets corresponds to one index (index) value, and the index value may be allocated by the RLC layer. The index value is used to identify a specific encoded data packet of a group of encoded data packets corresponding to a sequence number (sequence number, SN). For example, index values of the group of K encoded data packets may be 0, 1, 2, ..., K-1, or 1, 2, 3, ..., K in sequence. In this implementation, an index value is allocated to the original data packet corresponding to the first sequence number, so that when decoding succeeds, the receiving end can identify that there is no need to wait for receiving the encoded data packet corresponding to the index value, thereby avoiding unnecessary automatic retransmission and waiting of the RLC, and improving resource utilization.

With reference to the first aspect, in some implementations of the first aspect, a packet header is added to one encoded data packet of the K encoded data packets at the first protocol layer to generate a second protocol data unit, where the packet header of the second protocol data unit includes the first sequence number and a first index value; and the second protocol data unit is sent to a second communication apparatus. In this implementation, the transmitting end can send the original data packet with an index value flag, and when decoding succeeds, the receiving end can identify that there is no need to wait for receiving the encoded data packet corresponding to the index value, thereby avoiding unnecessary automatic retransmission and waiting of the RLC, and improving resource utilization.

Optionally, the RLC entity adds an RLC packet header to each encoded data packet at the RLC layer, to generate a corresponding second protocol data unit, where the second protocol data unit is an RLC PDU. Optionally, when the RLC entity is an AM RLC entity, compared with an existing RLC PDU format, the RLC entity adds an index value field to the RLC packet header, and fills in an index value corresponding to the encoded data packet. In this implementation, the transmitting end can send the original data packet with an index value flag, and when decoding succeeds, the receiving end can identify that there is no need to wait for receiving the encoded data packet corresponding to the index value, thereby avoiding unnecessary automatic retransmission and waiting of the RLC, and improving resource utilization.

Optionally, the packet header of the second protocol data unit further includes a segmentation information (segmentation information, SI) field. The segmentation information indicates segmentation information of an encoded data packet corresponding to the first sequence number and the index value. In other words, one second protocol data unit may include one complete encoded data packet, or include some segments of one encoded data packet. Optionally, the segmentation information may indicate one of the following cases:
the second protocol data unit includes an entire encoded data packet that corresponds to the first index value and that is of the K encoded data packets; or
the second protocol data unit includes a first segment of an encoded data packet that corresponds to the first index value and that is of the K encoded data packets; or
the second protocol data unit includes a last segment of an encoded data packet that corresponds to the first index value and that is of the K encoded data packets; or
the second protocol data unit includes a middle segment of an encoded data packet that corresponds to the first index value and that is of the K encoded data packets.

In this implementation, segmented transmission of the encoded data packet can be implemented, thereby improving transmission efficiency.

With reference to the first aspect, in some implementations of the first aspect, the transmitting end receives an RLC status report from the receiving end, where the RLC status report includes indication information, and the indication information indicates a receiving status of the encoded data packet corresponding to the first sequence number and the first index value; and when the indication information indicates that the encoded data packet corresponding to the first sequence number and the first index value is not successfully received, the transmitting end retransmits the encoded data packet corresponding to the first sequence number and the first index value. In this implementation, the transmitting end may retransmit, based on the RLC status report, the encoded data packet that is not received, to ensure transmission reliability.

Optionally, the RLC status report is generated by an RLC entity of the receiving end, and indicates the receiving status of the encoded data packet corresponding to the first sequence number and the first index value of the receive end. The indication of the receiving status may be that an index value field is introduced into the RLC status report, and indicates the receiving status of the encoded packet corresponding to the index value. Each field related to the sequence number in the status report is associated with one index value field. In this implementation, the transmitting end may retransmit, based on the RLC status report, the encoded data packet that is not received, to ensure transmission reliability.

Optionally, the first protocol layer is an RLC layer, and the second protocol layer is a PDCP layer or a network coding layer. In this implementation, the original data packet is transmitted to the RLC layer by using the PDCP layer or the network coding layer, thereby reducing system complexity and improving layered transmission efficiency.

Optionally, the foregoing network coding generation manner, namely, an encoding manner, includes random linear network coding (random linear network coding, RLNC), convolutional network coding (convolutional network coding, CNC), deterministic linear network coding, batched sparse code (batched sparse code, BATS), erasure code (erasure code), fountain code (fountain code), convolutional network coding (convolutional network coding, CNC), streaming code (streaming code), maximum distance separable (Maximum Distance Separable, MDS) code, LT (Luby Transform) code, rateless code, RS (Reed-Solomon) code, and the like. A specific code type to be used may be based on a system design requirement, a protocol specification, or a configuration. Details are not described herein.

According to a second aspect, an embodiment of this application provides a data transmission method. The method may be performed by a terminal or a network device, or may be performed by a component (for example, a processor, a chip, or a chip system) of a terminal or a network device, and the method includes: A receiving end receives, at a first protocol layer, a second protocol data unit from a first communication apparatus. The receiving end determines a first sequence number and a first index value that are of the second protocol data unit, where the second protocol data unit corresponds to an encoded data packet that corresponds to the first index value and that is of K encoded data packets corresponding to the first sequence number. The corresponding first sequence number and the first index value are allocated to the encoded data packet, so that when decoding succeeds, the receiving end does not need to wait for receiving the encoded data packet corresponding to the first index value, thereby avoiding unnecessary retransmission and waiting of an RLC layer, and improving resource utilization.

With reference to the second aspect, in some implementations of the second aspect, when the first sequence number falls within a receive window of an RLC entity, or the first sequence number is greater than or equal to a value of a first variable of the RLC entity, the receiving end places the second protocol data unit into a buffer. In this implementation, the receiving end can only receive an second protocol data unit that falls within the receive window of the RLC entity and place the second protocol data unit into the buffer, thereby improving transmission efficiency.

With reference to the second aspect, in some implementations of the second aspect, a packet header of the second protocol data unit further includes segmentation information; and when the segmentation information indicates that the second protocol data unit includes the entire encoded data packet that corresponds to the first index value and that is of the K encoded data packets, the receiving end decodes the encoded data packet that corresponds to the first index value and that is of the K encoded data packets to obtain an original data packet. In this implementation, the original data packet is obtained by decoding the encoded data packet, so that a problem of a burst error occurring on a channel can be resolved, thereby ensuring transmission reliability.

Optionally, if all parts of the encoded data packet that corresponds to the first index value and that is of the K encoded data packets cannot be decoded, the data packet is considered as processed.

With reference to the second aspect, in some implementations of the second aspect, a packet header of the second protocol data unit further includes segmentation information; and when the segmentation information indicates that the second protocol data unit includes one segment of the encoded data packet that corresponds to the first index value and that is of the K encoded data packets, the receiving end reassembles the encoded data packet that corresponds to the first index value and that is of the K encoded data packets to obtain a complete encoded data packet, and performs decoding to obtain an original data packet. In this implementation, the original data packet is obtained after the encoded data packet is reassembled, to obtain the complete encoded data packet, and then decoded, so that a problem of a burst error occurring on a channel can be resolved, thereby ensuring transmission reliability.

Optionally, if the reassembled encoded data packet cannot be decoded, the data packet is considered as processed. Optionally, if the segmented encoded data packet cannot be reassembled with another segmented encoded data packet, the encoded data packet is considered as processed.

With reference to the second aspect, in some implementations of the second aspect, when the first sequence number falls outside a receive window of an RLC entity, or the first sequence number is less than a value of a first variable of the RLC entity, or the second protocol data unit is received, the receiving end discards the second protocol data unit. In this implementation, when decoding succeeds, the receiving end does not need to receive the encoded data packet that falls within the receive window of the RLC entity. This can avoid unnecessary retransmission and waiting of the RLC layer, thereby improving resource utilization.

Optionally, the RLC entity may be an AM RLC entity. If the first sequence number carried in the second protocol data unit falls within the window, or the second protocol data unit is not received, the AM RLC entity places the second protocol data unit into a receiving buffer. Optionally, if the first sequence number carried in the second protocol data unit falls outside the window, or the second protocol data unit is received, the AM RLC entity discards the second protocol data unit. In this implementation, when decoding succeeds, the receiving end does not need to receive the encoded data packet that falls within the receive window of the RLC entity. This can avoid unnecessary retransmission and waiting of the RLC layer, thereby improving resource utilization.

Optionally, the RLC entity may be an UM RLC entity. If the first sequence number carried in the second protocol data unit falls within the window, or the first sequence number is greater than or equal to the value of the first variable (for example, RX_Next_Reassembly) of the RLC entity (namely, SN≥RX_Next_Reassembly), the UM RLC entity places the second protocol data unit into the receiving buffer. Optionally, if the first sequence number carried in the second protocol data unit falls outside the window, or the first sequence number is less than the value of the first variable of the RLC entity (namely, SN<RX_Next_Reassembly), the UM RLC entity discards the second protocol data unit. In this implementation, when decoding succeeds, the receiving end does not need to receive the encoded data packet that falls within the receive window of the RLC entity. This can avoid unnecessary retransmission and waiting of the RLC layer, thereby improving resource utilization.

With reference to the second aspect, in some implementations of the second aspect, when the original data packet corresponding to the first sequence number is successfully decoded, the receiving end discards the second protocol data unit that is in the buffer and whose packet header includes the first sequence number, and updates one or more of the receive window, a second variable, the first variable, and a timer that are of the RLC entity. In this implementation, after the original data packet is successfully decoded, the receiving end may continue to receive a next original data packet, thereby improving transmission efficiency.

Optionally, in an implementation in which the receiving end discards the second protocol data unit that is in the buffer and whose packet header includes the first sequence number, the RLC entity is the AM RLC entity. If encoded data packets corresponding to the first sequence number are successfully decoded, the receiving end considers that all encoded data packets corresponding to the first sequence number are received, or that remaining encoded data packets that are not received do not need to be received. Subsequently, when the encoded data packet corresponding to the first sequence number is received, the encoded data packet may be directly discarded.

Optionally, that the receiving end updates a second variable of the RLC entity includes: The receiving end updates the second variable of the RLC entity to a second sequence number corresponding to a next to-be-decoded data packet, where the second sequence number is different from the first sequence number. In this implementation, after the original data packet is successfully decoded, the receiving end may continue to receive a next original data packet, thereby improving transmission efficiency.

Optionally, the AM RLC entity updates a variable or a timer maintained by the AM RLC entity. For example, when the first sequence number is equal to the second variable (namely, SN=RX_Next), and when the encoded data packets corresponding to the first sequence number are successfully decoded, the AM RLC entity updates the second variable to the second sequence number corresponding to the to-be-decoded data packet.

With reference to the second aspect, in some implementations of the second aspect, the method further includes: The receiving end feeds back an RLC status report to a transmitting end, where the RLC status report includes an indication field, and the indication field indicates a receiving status of the encoded data packet corresponding to the first sequence number and the first index value. In this implementation, the transmitting end may retransmit, based on the RLC status report, the encoded data packet that is not received, to ensure transmission reliability.

Optionally, the RLC status report is generated by an RLC entity of the receiving end, and indicates the receiving status of the encoded data packet corresponding to the first sequence number and the first index value of the receive end. The indication of the receiving status may be that an index value field is introduced into the RLC status report, and indicates the receiving status of the encoded packet corresponding to the index value. Each field related to the sequence number in the status report is associated with one index value field. In this implementation, the transmitting end may retransmit, based on the RLC status report, the encoded data packet that is not received, to ensure transmission reliability.

With reference to the second aspect, in some implementations of the second aspect, the first protocol layer is an RLC layer. In this implementation, the receiving end can process the second protocol data unit at the RLC layer, thereby improving layered transmission efficiency.

Optionally, the second protocol data unit may be an RLC PDU. The original data packet may be a data packet obtained after the RLC layer performs aggregation and/or segmentation based on an SDU or a PDU of a PDCP layer, or may be an SDU or a PDU. The first sequence number corresponding to the original data packet may be a sequence number allocated by the RLC layer to the original data packet after the RLC layer obtains the original data packet. Different original data packets may be distinguished by using different sequence numbers.

According to a third aspect, an embodiment of this application provides a data transmission method. The method may be performed by a terminal or a network device, or may be performed by a component (for example, a processor, a chip, or a chip system) of a terminal or a network device, and the method includes: A receiving end obtains at least M complete second protocol data units, and decodes the M complete second protocol data units at a second protocol layer to obtain an original data packet, where a total quantity of second protocol data units obtained by performing network coding on the original data packet is K, K and M are positive integers, and K≥M. The receiving end transfers, at the second protocol layer, indication information to a first protocol layer, where the indication information includes a sequence number range of the K second protocol data units or sequence numbers corresponding to some second protocol data units of the K second protocol data units. Different sequence numbers are allocated to original data packets, so that after decoding succeeds, the receiving end does not need to wait for receiving an encoded data packet that is successfully decoded, thereby avoiding unnecessary retransmission and waiting of an RLC layer, and improving resource utilization.

Optionally, for the original data packet, the transmitting end may perform a network coding function at a PDCP layer or a specially introduced network coding layer, and the receiving end correspondingly performs decoding at the PDCP layer or the network coding layer. The original data packet may be a data packet obtained after aggregation and/or segmentation are/is performed based on an SDU or a PDU of the PDCP layer, or may be an SDU or a PDU. The PDCP layer or the network coding layer processes the original data packet before encoding, generates a group of K encoded data packets, and submits the group of K encoded data packets to an RLC entity of the transmitting end for processing. Then, the transmitting end receives K second protocol data units at the RLC layer, where the second protocol data units are RLC SDUs, and sends the K second protocol data units to the receiving end.

Optionally, the receiving end receives complete second protocol data units at the first protocol layer and submits the complete second protocol data units to the second protocol layer. If a segmented second protocol data unit is received, the receiving end waits for the second protocol data unit to be reassembled to a complete second protocol data unit and then submits the complete second protocol data unit to the second protocol layer.

With reference to the third aspect, in some implementations of the third aspect, the first protocol layer is the RLC layer, and the second protocol layer is the PDCP layer or the network coding layer. In this implementation, network coding can implement a layered processing function, thereby reducing system complexity and improving layered transmission efficiency.

With reference to the third aspect, in some implementations of the third aspect, the receiving end does not wait for, at the first protocol layer, receiving the second protocol data units corresponding to the sequence numbers in the indication information, and updates one or more of a receive window, a second variable, a first variable, and a timer that are of the RLC entity. In this implementation, after the original data packet is successfully decoded, the receiving end may continue to receive a next original data packet, thereby improving transmission efficiency.

Optionally, in an implementation in which the receiving end does not wait for, at the first protocol layer, receiving the second protocol data units corresponding to the sequence numbers in the indication information, the second protocol layer indicates, to the first protocol layer, that a second protocol data unit corresponding to a sequence number (for example, an RLC SN) of a specific second protocol data unit or a sequence number range of a specific second protocol data unit is no longer needed. For example, if second protocol data units with sequence numbers 1 to 6 correspond to a group of encoded data packets, and a second communication apparatus successfully receives four complete encoded packets (for example, with SNs 1, 3, 4, and 6) and obtains an original data packet through decoding, the second protocol layer may indicate, to the first protocol layer, that second protocol data units with RLC SNs in a range of 1 to 6 no longer need to be received, or the second protocol layer may indicate, to the first protocol layer, that second protocol data units with RLC SNs 2 and 5 no longer need to be received. Optionally, when the first protocol layer learns that the encoded data packets with the RLC SNs 1 to 6 belong to a same original data packet, the second protocol layer may indicate that the RLC SN of the second protocol data unit at the first protocol layer is any one of the RLC SNs 1 to 6, indicating that the second protocol data units with the RLC SNs 1 to 6 do not need to be waited for receiving. In this implementation, after decoding succeeds, the receiving end does not need to wait for receiving the encoded data packet that is successfully decoded. This can avoid unnecessary retransmission and waiting of the RLC layer, thereby improving resource utilization.

Optionally, in an implementation in which the receiving end updates one or more of the receive window, the second variable, the first variable, and the timer that are of the RLC entity, the first protocol layer of the receiving end considers, based on indication of the second protocol layer, that all corresponding second protocol data units are received. Therefore, the RLC entity of the first protocol layer updates a variable or a timer maintained by the RLC entity. For example, if the first protocol layer obtains, based on the indication of the second protocol layer, a sequence number (SN=RX_Next) of a successfully received second protocol data unit, the first protocol layer updates RX_Next to a sequence number corresponding to a next to-be-received second protocol data unit. In addition, when feeding back an RLC status report, the first protocol layer does not need to feed back negative acknowledgment (negative acknowledgment, NACK) information corresponding to the sequence number. In this implementation, after the original data packet is successfully decoded, the receiving end may continue to receive a next original data packet, thereby improving transmission efficiency.

With reference to the third aspect, in some implementations of the third aspect, the first protocol layer functions in a distributed unit (distributed unit, DU), and the second protocol layer functions in a central unit (central unit, CU). In this implementation, a network device using a CU-DU split architecture may perform function block processing, thereby reducing system complexity, increasing flexibility, and improving system transmission efficiency.

Optionally, the receiving end is the network device using the CU-DU split architecture, and information exchange between an entity at the second protocol layer and an entity at the first protocol layer needs to be transmitted by using an F1 interface between a CU and a DU. Therefore, a message format supported on an existing interface needs to be enhanced, so that the DU can carry RLC SN information when sending the second protocol data unit to the CU, and the CU indicates, to the DU, that second protocol data units corresponding to specific RLC SNs no longer need to be received. In this implementation, the network device using the CU-DU split architecture may perform function block processing, thereby reducing system complexity, increasing flexibility, and improving system transmission efficiency.

According to a fourth aspect, an embodiment of this application provides an apparatus. The apparatus may implement the method according to any one of the first aspect or the possible implementations of the first aspect. The apparatus includes a corresponding unit or component configured to perform the foregoing method. The unit included in the apparatus may be implemented in a software and/or hardware manner. The apparatus may be, for example, a terminal, a network device, a server, or a centralized controller, or a chip, a chip system, or a processor that can support the terminal, the network device, the server, or the centralized controller in implementing the foregoing method.

According to a fifth aspect, an embodiment of this application provides an apparatus. The apparatus may implement the method according to any one of the second aspect or the possible implementations of the second aspect. The apparatus includes a corresponding unit or component configured to perform the foregoing method. The unit included in the apparatus may be implemented in a software and/or hardware manner. The apparatus may be, for example, a terminal, a network device, a server, or a centralized controller, or a chip, a chip system, or a processor that can support the terminal, the network device, the server, or the centralized controller in implementing the foregoing method.

According to a sixth aspect, an embodiment of this application provides an apparatus. The apparatus may implement the method according to any one of the third aspect or the possible implementations of the third aspect. The apparatus includes a corresponding unit or component configured to perform the foregoing method. The unit included in the apparatus may be implemented in a software and/or hardware manner. The apparatus may be, for example, a terminal, a network device, a server, or a centralized controller, or a chip, a chip system, or a processor that can support the terminal, the network device, the server, or the centralized controller in implementing the foregoing method.

According to a seventh aspect, an embodiment of this application provides an apparatus. The apparatus includes a processor. The processor is coupled to a memory. The memory is configured to store a program or instructions. When the program or the instructions is/are executed by the processor, the apparatus is enabled to implement the method according to any one of the first aspect or the possible implementations of the first aspect.

According to an eighth aspect, an embodiment of this application provides an apparatus. The apparatus includes a processor. The processor is coupled to a memory. The memory is configured to store a program or instructions. When the program or the instructions is/are executed by the processor, the apparatus is enabled to implement the method according to any one of the second aspect or the possible implementations of the second aspect.

According to an ninth aspect, an embodiment of this application provides an apparatus. The apparatus includes a processor. The processor is coupled to a memory. The memory is configured to store a program or instructions. When the program or the instructions is/are executed by the processor, the apparatus is enabled to implement the method according to any one of the third aspect or the possible implementations of the third aspect.

According to a tenth aspect, an embodiment of this application provides a computer-readable medium. The computer-readable medium stores a computer program or instructions. When the computer program or instructions is/are executed, a computer is enabled to perform the method according to any one of the first aspect or the possible implementations of the first aspect.

According to an eleventh aspect, an embodiment of this application provides a computer-readable medium. The computer-readable medium stores a computer program or instructions. When the computer program or the instructions is/are executed, a computer is enabled to perform the method according to any one of the second aspect or the possible implementations of the second aspect.

According to a twelfth aspect, an embodiment of this application provides a computer-readable medium. The computer-readable medium stores a computer program or instructions. When the computer program or the instructions is/are executed, a computer is enabled to perform the method according to any one of the third aspect or the possible implementations of the third aspect.

According to a thirteenth aspect, an embodiment of this application provides a computer program product. The computer program product includes computer program code. When the computer program code is run on a computer, the computer is enabled to perform the method according to any one of the first aspect or the possible implementations of the first aspect.

According to a fourteenth aspect, an embodiment of this application provides a computer program product. The computer program product includes computer program code. When the computer program code is run on a computer, the computer is enabled to perform the method according to any one of the second aspect or the possible implementations of the second aspect.

According to a fifteenth aspect, an embodiment of this application provides a computer program product. The computer program product includes computer program code. When the computer program code is run on a computer, the computer is enabled to perform the method according to any one of the third aspect or the possible implementations of the third aspect.

According to a sixteenth aspect, an embodiment of this application provides a chip. The chip includes a processor. The processor is coupled to a memory. The memory is configured to store a program or instructions. When the program or the instructions is/are executed by the processor, the chip is enabled to implement the method according to any one of the first aspect or the possible implementations of the first aspect.

According to a seventeenth aspect, an embodiment of this application provides a chip. The chip includes a processor. The processor is coupled to a memory. The memory is configured to store a program or instructions. When the program or the instructions is/are executed by the processor, the chip is enabled to implement the method according to any one of the second aspect or the possible implementations of the second aspect.

According to an eighteenth aspect, an embodiment of this application provides a chip. The chip includes a processor. The processor is coupled to a memory. The memory is configured to store a program or instructions. When the program or the instructions is/are executed by the processor, the chip is enabled to implement the method according to any one of the third aspect or the possible implementations of the third aspect.

### BRIEF DESCRIPTION OF DRAWINGS

FIG. 1 is a diagram of a communication system to which an embodiment according to this application is applied;
FIG. 2 is a diagram of a plurality of specific communication scenarios to which an embodiment according to this application is applied;
FIG. 3 is a diagram of an example of an architecture of a communication system;
FIG. 4 is a schematic flowchart of a communication method according to an embodiment of this application;
FIG. 5 is a diagram of an RLC status report that carries an index according to an embodiment of this application;
FIG. 6 is a schematic flowchart of a communication method according to an embodiment of this application;
FIG. 7 is a schematic flowchart of a communication method according to an embodiment of this application;
FIG. 8 is a diagram of a structure of a communication apparatus according to an embodiment of this application;
FIG. 9 is a diagram of a structure of another communication apparatus according to an embodiment of this application; and
FIG. 10 is a diagram of a structure of still another communication apparatus according to an embodiment of this application.

### DESCRIPTION OF EMBODIMENTS

The following describes the technical solutions in embodiments of this application with reference to the accompanying drawings in embodiments of this application.

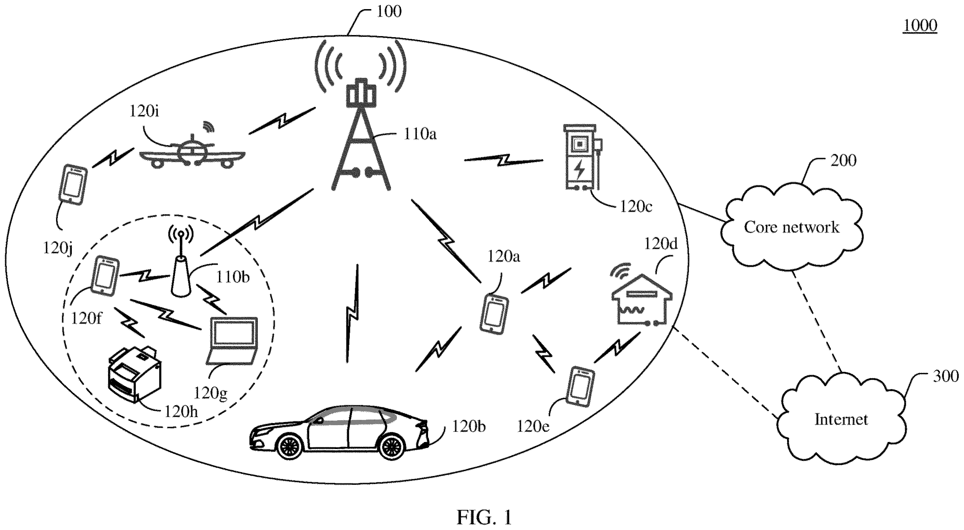

A method and an apparatus provided in embodiments of this application may be applied to a communication system. FIG. 1 is a diagram of an architecture of a communication system 1000 to which an embodiment of this application is applied. As shown in FIG. 1, the communication system includes a radio access network 100 and a core network 200. Optionally, the communication system 1000 may further include an Internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. The core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is merely an example diagram. The communication system may further include other network devices, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation base station (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes some functions of the base station, for example, may be a central unit (central unit, CU), or may be a distributed unit (distributed unit, DU). The radio access network device may be a macro base station (like 110a in FIG. 1), or may be a micro base station or an indoor base station (like 110b in FIG. 1), or may be a relay node or a donor node. A specific technology and a specific device form that are used by the radio access network device are not limited in embodiments of this application. For ease of description, the following provides descriptions by using an example in which the radio access network device is a base station.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), Internet of things (Internet of things, IOT), virtual reality, augmented reality, industrial control, autonomous driving, telemedicine, smart grid, smart furniture, smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A specific technology and a specific device form used by the terminal are not limited in embodiments of this application.

The base station and the terminal may be fixed or movable. The base station and the terminal may be deployed on land, including an indoor or outdoor scenario, and a handheld or a vehicle-mounted scenario; or may be deployed on water; or may be deployed on an airplane, a balloon, or an artificial satellite in the air. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, a terminal 120i is a base station. However, for a base station 110a, 120i is a terminal. In other words, communication between 110a and 120i is performed by using a radio air interface protocol. Certainly, 110a and 120i may alternatively communicate with each other based on an interface protocol between base stations. In this case, for 110a, 120i is also a base station. Therefore, both the base station and the terminal may be collectively referred to as communication apparatuses, and 110a, 110b, and 120a to 120j in FIG. 1 may be referred to as communication apparatuses that have respective corresponding functions, for example, communication apparatuses having a base station function or communication apparatuses having a terminal function.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including a base station function. The control subsystem including the base station function herein may be a control center in an application scenario of the foregoing terminal, for example, a smart grid, industrial control, smart transportation, and a smart city. A function of the terminal may alternatively be performed by a module (for example, a chip or a modem) in the terminal, or may be performed by an apparatus including a terminal function.

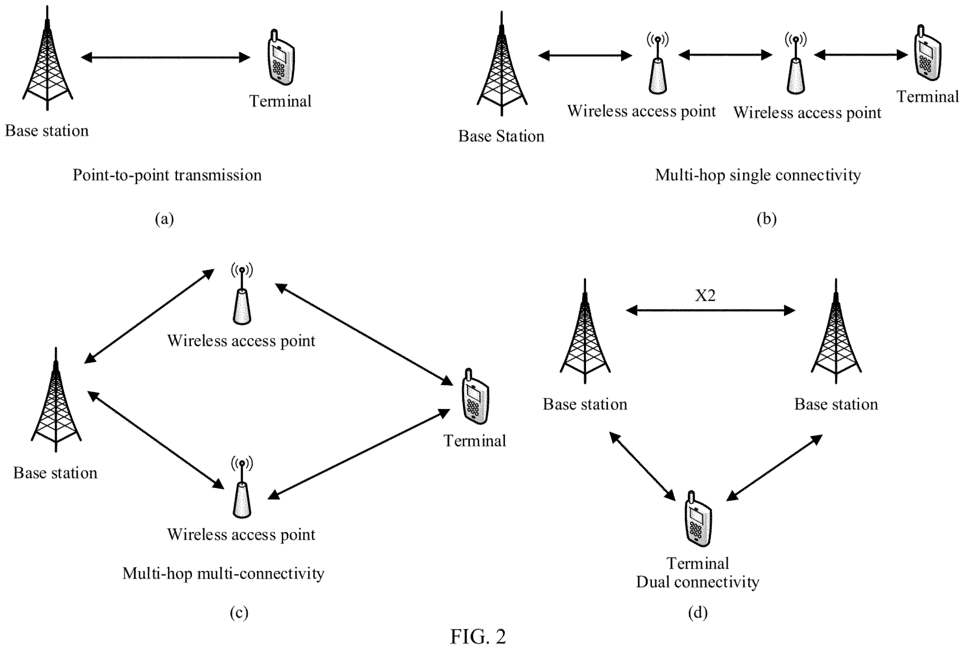

Further, this application may be applied to a plurality of specific communication scenarios, for example, point-to-point transmission between a base station and a terminal or between terminals (for example, point-to-point transmission between a base station and a terminal in (a) in FIG. 2), multi-hop transmission between a base station and a terminal (for example, in (b) and (c) in FIG. 2), dual connectivity (dual connectivity, DC) (for example, in (d) in FIG. 2) or multi-connectivity between a plurality of base stations and a terminal, and another scenario. It should be noted that the foregoing specific communication application scenarios are merely examples, and do not constitute a limitation. Particularly, from a service perspective, embodiments of this application are applicable to a plurality of service scenarios, for example, a data encoding scenario in an extended reality (extended reality, XR) service and an uplink high-capacity scenario. In addition, FIG. 2 constitutes no limitation on a network architecture applicable to this application. Transmission like uplink transmission, downlink transmission, access link transmission, backhaul (backhaul) link transmission, and sidelink (sidelink) transmission is not limited in this application.

Technologies described in embodiments of the present invention may be applied to various communication systems, for example, a 4th generation (4th generation, 4G) communication system, a 4.5G communication system, a 5G communication system, a system converged by a plurality of communication systems, and a future evolved communication system (for example, a 6G communication system). For example, the communication system may be a long term evolution (long term evolution, LTE) system, a new radio (new radio, NR) system, a wireless fidelity (wireless fidelity, Wi-Fi) system, a wireless self-organizing system, a device-to-device direct communication system, a communication system related to the 3rd generation partnership project (3rd generation partnership project, 3GPP), and another communication system of this type.

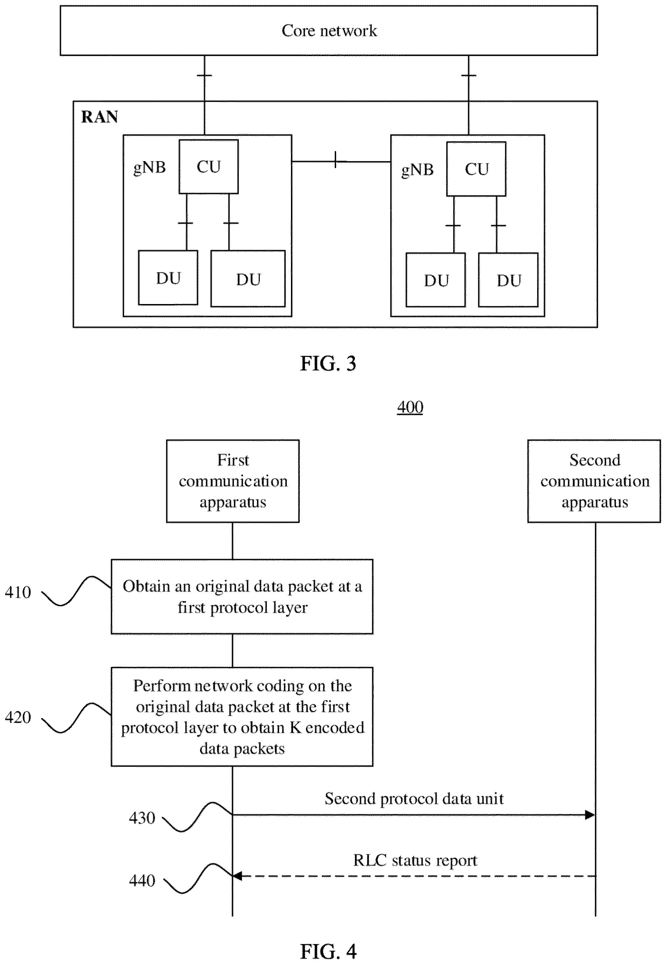

FIG. 3 is a diagram of an example of a possible architecture of a communication system. As shown in FIG. 3, a network device in a radio access network (radio access network, RAN) is a base station (for example, a gNodeB or a gNB) with an architecture in which a central unit (central unit, CU) and a distributed unit (distributed unit, DU) are separated. The RAN may be connected to a core network (for example, the core network may be an LTE core network or a 5G core network). It may be understood that the base station is divided into the CU and the DU from a perspective of a logical function. The CU and the DU may be physically separated or deployed together. A plurality of DUs may share one CU. One DU may alternatively be connected to a plurality of CUs (not shown in the figure). The CU and the DU may be connected through an interface, for example, an F1 interface. The CU and the DU may be divided based on a protocol layer of a wireless network. For example, functions of a packet data convergence protocol (packet data convergence protocol, PDCP) layer and a radio resource control (radio resource control, RRC) layer are provided on the CU, but functions of a radio link control (radio link control, RLC) layer, a media access control (media access control, MAC) layer, and a physical (physical) layer are provided on the DU. It may be understood that, division into processing functions of the CU and the DU based on the protocol layers is merely an example, and there may be other division. For example, the CU or the DU may have functions of more protocol layers through division. For example, the CU or the DU may alternatively have some processing functions of the protocol layers through division. In a design, some functions of the RLC layer and functions of protocol layers above the RLC layer are provided on the CU, and remaining functions of the RLC layer and functions of protocol layers below the RLC layer are provided on the DU. In another design, functions of the CU or the DU may alternatively be obtained through division based on a service type or another system requirement. For example, division is performed based on a latency, a function whose processing time needs to satisfy a latency requirement is provided on the DU, and a function whose processing time does not need to satisfy the latency requirement is provided on the CU. The network architecture shown in FIG. 3 may be applied to a 5G communication system, and may alternatively share one or more components or resources with an LTE system. In another design, the CU may alternatively have one or more functions of the core network. One or more CUs may be disposed together or separately. For example, the CUs may be disposed on a network side for ease of centralized management. The DU may have a plurality of radio frequency functions, or the radio frequency functions may be disposed remotely.

The function of the CU may be implemented by one entity, or may be used to further separate a control plane (CP) and a user plane (UP). To be specific, the control plane of the CU (CU-CP) and the user plane of the CU (CU-UP) may be implemented by different function entities, and the CU-CP and the CU-UP may be coupled to the DU to jointly implement a function of a base station.

It may be understood that embodiments provided in this application are also applicable to an architecture in which the CU and the DU are not separated.

For ease of understanding, communication nouns or terms used in embodiments of this application are first explained and described. The communication nouns or terms are also used as a part of content of this application.

A network coding technology provides a transmission mechanism that considers both a delay and spectral efficiency. In the network coding technology, a transmitting end encodes a plurality of original data units to obtain a plurality of encoded data units, and then generates a plurality of encoded packets. Each encoded packet includes one encoded data unit and coding coefficient indication information. A receiving end may decode the encoded data unit based on a coding coefficient, to obtain the original data unit.

In a communication system, a feedback retransmission mechanism can realize effective error control. For example, a hybrid automatic repeat request (hybrid automatic repeat request, HARQ) retransmission mechanism of a medium access control (medium access control, MAC) layer, and an automatic repeat request (automatic repeat request, ARQ) retransmission mechanism of a radio link control (radio link control, RLC) layer jointly ensure transmission reliability. With evolution and development of communication technologies, new radio (new radio, NR) has higher requirements on system reliability and effectiveness. The ARQ mechanism is a function in an acknowledged mode (acknowledged mode, AM) at the RLC layer. An ARQ operation of the transmitting end includes transmitting and retransmitting a protocol data unit (protocol data unit, PDU) or segmenting or receiving a status report sent by the receiving end, and receiving a HARQ sending failure indication sent by a lower layer. An ARQ operation of the receiving end includes detecting whether receiving of an RLC PDU fails. The RLC layer status report periodically reports a data receiving status to the transmitting end. Information included in the status report includes a sequence number (sequence number, SN) of the RLC PDU received by the receiving end and an SN of an RLC PDU that is not received. When detecting a packet loss, the receiving end notifies the transmitting end of a failure to receive an AM PDU or a re-segment by using the RLC layer status report, and requests the transmitting end to retransmit the PDU.

A feedback-based retransmission delay is long, and round-trip time (round-trip time, RTT) of one time of uplink HARQ processing in a frequency-division duplex (frequency-division duplex, FDD) system is eight transmission time intervals (transmission time interval, TTI). Therefore, the feedback retransmission mechanism faces a plurality of problems, for example, problems of frequent feedback overheads and a performance loss in a multicast or broadcast scenario, and a problem of a severe performance loss in a scenario of burst consecutive errors, and a dual-connection or multi-connection congestion scenario. As a forward error correction technology, the network coding technology encodes original data packets and adds redundancy to resist a problem like a packet loss, a performance loss, or the like in wireless transmission. This avoids a delay and feedback overheads caused by feedback. A code type of the network coding includes random linear network coding (random linear network coding, RLNC), convolutional network coding (convolutional network coding, CNC), deterministic linear network coding, batched sparse code (batched sparse code, BATS), erasure code (erasure code), fountain code (fountain code), convolutional network coding (convolutional network coding, CNC), streaming code (streaming code), maximum distance separable (Maximum Distance Separable, MDS) code, LT (Luby Transform) code, rateless code, RS (Reed-Solomon) code, and the like.

In a radio channel environment, due to impact of channel additive noise, a random error occurs in a code block (code block, CB) in a physical layer transport block (transport block, TB) received by the receiving end. The TB may be a data packet of a higher layer, and a size of the data packet is close to a size of the CB. For low-latency services, there is no chance of retransmission at the physical layer due to strict restrictions on a transmission delay. As a result, data packets are randomly lost at the higher layer. In addition, due to factors such as attenuation caused by mobility or interference caused by another user, consecutive errors occur in CBs obtained after decoding by the receiving end. Similarly, for a low-delay service, a phenomenon of consecutive packet losses occurs at the higher layer. However, for a group of RLNCs, if a quantity L of correctly received encoded packets is not less than a quantity N of original data packets, and a rank of a matrix including coding coefficient vectors carried in headers of the L encoded packets is N (N is the quantity of original data packets), the receiving end can still obtain the N original data packets through decoding. Therefore, in an RLNC technology, the transmitting end does not need to wait for a feedback request from the receiving end for retransmission. The RLNC may send several encoded packets in advance to resist impact of radio channels, to reduce a delay. In addition, no numerous resources need to be consumed for blind retransmission of each TB, avoiding a waste of spectrum resources.

To resolve the foregoing technical problem, an embodiment of this application proposes a network coding method. In the method, a network coding function is introduced at an RLC layer, a sequence number (sequence number, SN) is allocated to an original data packet before encoding, and corresponding encoded packets are uniformly considered as segments corresponding to the SN. In this way, a window mechanism and a procedure of the RLC in the conventional technology can be reused to a maximum extent. In addition, there is no impact on a PDCP layer, a function is easy to be implemented, and complexity of device upgrade is small. In this method, after the PDCP layer receives sufficient encoded packets and can restore the original data packet, other redundant encoded packets are not needed. The PDCP layer indicates information about a data packet that is no longer needed by the RLC layer, so that the RLC layer can be prevented from performing unnecessary retransmission and waiting on the redundant encoded packets, thereby improving resource utilization.

In embodiments of this application, a data packet before encoding may be referred to as an original data packet, a system data packet, a system data block, an original data block, original data, or the like, and a data packet after encoding may be referred to as an encoded data packet, an encoded block, or the like. One piece of data before encoding includes one or more data packets before encoding, where the data packet before encoding may also be referred to as an original data packet an original packet, or the like. One piece of data after encoding includes one or more data packets after encoding, where the data packet after encoding may also be referred to as an encoded data packet, an encoded packet, or the like. In the following descriptions of this application, different names of a same concept are used in different places, and have a same meaning. Details are not described again.

In embodiments of this application, communication between the terminal device and the access network device complies with a specific protocol layer structure. For example, a control plane protocol layer structure may include an RRC layer, a PDCP layer, an RLC layer, a MAC layer, and a physical layer (physical layer, PHY), and a user plane protocol layer structure may include a PDCP layer, an RLC layer, a MAC layer, and a physical layer. In a possible implementation, there may be a service data adaptation protocol (service data adaptation protocol, SDAP) layer above the PDCP layer. The SDAP layer, the PDCP layer, the RLC layer, the MAC layer, and the physical layer may be collectively referred to as an access stratum. For specific descriptions of the foregoing protocol layers, refer to related technical specifications of the 3GPP.

Data transmission between the access network device and the terminal device is used as an example. Data transmission needs to pass through a user plane protocol layer, for example, the SDAP layer, the PDCP layer, the RLC layer, the MAC layer, or the physical layer. For example, at least one data radio bearer (data radio bearer, DRB) is established between the access network device and the terminal device for data transmission. Each DRB may correspond to a set of functional entities, for example, include one PDCP layer entity, at least one RLC layer entity corresponding to the PDCP layer entity, at least one MAC layer entity corresponding to the at least one RLC layer entity, and at least one physical layer entity corresponding to the at least one MAC layer entity.

Downlink data transmission is used as an example. After obtaining data from an upper layer, an SDAP layer entity may map the data to a PDCP layer entity of a corresponding DRB based on a quality of service (quality of service, QoS) flow indicator (QoS flow indicator, QFI) of the data. The PDCP layer entity may transmit the data to at least one RLC layer entity corresponding to the PDCP layer entity, and then the at least one RLC layer entity transmits the data to a corresponding MAC layer entity. Then, the MAC layer entity generates a transport block, and performs wireless transmission by using a corresponding physical layer entity. The data is correspondingly encapsulated at each layer. Data received by a layer from an upper layer of the layer is considered as a service data unit (service data unit, SDU) of the layer, is encapsulated by the layer into a protocol data unit (protocol data unit, PDU), and then is transferred to a next layer. For example, data received by the PDCP layer entity from an upper layer is referred to as a PDCP SDU, and data sent by the PDCP layer entity to a lower layer is referred to as a PDCP PDU. Data received by the RLC layer entity from an upper layer is referred to as an RLC SDU, and data sent by the RLC layer entity to a lower layer is referred to as an RLC PDU. Data may be transmitted between different layers through a corresponding channel. For example, data may be transmitted between the RLC layer entity and the MAC layer entity through a logical channel (logical channel, LCH), and data may be transmitted between the MAC layer entity and the physical layer entity through a transport channel (transport channel).

In embodiments of this application, a protocol layer having an encoding/decoding function may be an RLC layer, or may be a PDCP layer, or may be collectively referred to as a network coding layer. The network coding layer may alternatively be a new protocol layer other than the foregoing protocol layers. For example, the new protocol layer may be above the PDCP layer, above a BAP layer, between the PDCP layer and the RLC layer, between the RLC layer and the MAC layer, or between the MAC layer and the PHY layer. A location of the new protocol layer may not be limited in this application. The network coding layer may also be referred to as an encoding/decoding layer, an encoding and decoding layer, a network encoding/decoding layer, a network encoding and decoding layer, or another name. This is not limited in this application. The encoding/decoding function may be a network coding function, or may be another encoding/decoding function similar to the network coding function. This is not limited herein. The network coding layer encodes a data packet before encoding to generate a data packet after encoding. The data packet after encoding may be a data unit output by a module at the network coding layer. The outputting the encoded data unit may be understood as outputting, in the terminal device or the network device by using a communication interface, the encoded data unit to a module that subsequently processes the encoded data unit. It may be understood that output in this application means to send a signal or data over an air interface, or output a signal or data to another module in an apparatus (for example, the terminal device or the network device) through the communication interface. A specific process is specifically described in an application scenario. Details are not described herein.

In embodiments of this application, the RLC entity of a receiving end may be an unacknowledged mode (unacknowledged mode, UM) RLC entity or an acknowledged mode (acknowledged mode, AM) RLC entity. In a possible implementation, the RLC entity is a UM RLC entity, which is the same as a UM RLC entity in the conventional technology, and includes content such as a receive window, a corresponding variable (for example, RX_Next_Reassembly), and a timer (t-Reassembly). In another possible implementation, the RLC entity is an AM RLC entity, which is the same as an AM RLC entity in the conventional technology, and includes content such as a receive window, a receive variable (for example, RX_Next), and a timer (t-Reassembly).

In embodiments of this application, the GTP-U tunnel protocol is used to transmit data of the DRB between the CU and the DU. The GTP-U protocol is a protocol layer carried over the IP protocol. A GTP-U PDU includes a T-PDU (if the T-PDU is transmitted from the DU to the CU, the T-PDU may be an RLC SDU; and if the T-PDU is transmitted from the CU to the DU, the T-PDU may be a PDCP PDU) and a GTP-U header. A format of the GTP-U header may include a "Next Extension Header Type" field, indicating whether a GTP-U extension header is subsequently carried and a specific GTP-U extension header. A general format of a GTP-U extension header includes a 1-byte extension header length field, multi-byte extension header content, and a 1-byte "Next Extension Header Type" field. Currently, the GTP-U extension header may further carry a PDCP PDU SN, an NR RAN container (Container), and the like. The NR RAN container is a frame format defined in the NR user plane protocol in TS 38.425, and is used by the PDCP to control data transmission of the DRB. Currently, there are three frame formats: DL USER DATA, DL DATA DELIVERY STATUS, and ASSISTANCE INFORMATION DATA.

The following describes the technical solutions of this application in detail by using specific embodiments with reference to the accompanying drawings. The following embodiments and implementations may be combined with each other, and same or similar concepts or processes may not be described again in some embodiments. It should be understood that functions in this application may be implemented by using a hardware circuit, software running in combination with a processor/microprocessor or a general-purpose computer, an application-specific integrated circuit, and/or one or more digital signal processors. When described as a method, this application may also be implemented by a computer processor and a memory coupled to the processor.

FIG. 4 is a schematic flowchart of a communication method 400 according to an embodiment of this application. The method is performed by a first communication apparatus. The first communication apparatus may be a terminal (for example, an XR terminal), or may be a chip, a chip system, a processor, or the like that supports the terminal in implementing the method. Alternatively, the first communication apparatus may be a network device (for example, a core network device, an access network device, a Wi-Fi router, or a Wi-Fi access point), or may be a chip, a chip system, a processor, or the like that supports the network device in implementing the method. A sending device may be a server (for example, a cloud server), or may be a chip, a chip system, a processor, or the like that supports the server in implementing the method. As shown in FIG. 4, the method 400 in this embodiment may include a part 410 and a part 420.

Part 410: Obtain an original data packet at a first protocol layer, where the original data packet corresponds to a first sequence number, and the original data packet is from a first protocol data unit at a second protocol layer.

Part 420: Perform network coding on the original data packet at the first protocol layer to obtain K encoded data packets, where each encoded data packet of the K encoded data packets corresponds to one index value, and K is a positive integer.

In embodiments of this application, the first protocol layer may be a radio link control (radio link control, RLC) layer, and the second protocol layer may be a packet data convergence protocol (Packet Data Convergence Protocol, PDCP) layer. The original data packet may be a data packet obtained after the RLC layer performs aggregation (also referred to as cascading) and/or segmentation based on a service data unit (service data unit, SDU) or a protocol data unit (protocol data unit, PDU) of the PDCP layer, or may be an SDU or a PDU. The first sequence number corresponding to the original data packet may be a sequence number allocated by the RLC layer to the original data packet after the RLC layer obtains the original data packet. Different original data packets may be distinguished by using different sequence numbers.

In an implementation of the part 420, the RLC layer performs encoding processing on the original data packet, to generate a group of K encoded data packets. A manner of generating the encoded data packet, namely, an encoding manner, includes one or more of code types such as maximum distance separable (Maximum Distance Separable, MDS) code, random linear network coding (random linear network coding, RLNC) code, linear network coding (linear network coding, LNC) code, deterministic linear network coding, batched sparse (Batched Sparse, BATS) code, block (block) code, LT (Luby Transform) code, rateless (rateless) code, and RS (Reed-Solomon) code. A specific code type to be used may be determined based on a system design requirement, a protocol specification, or a configuration. Details are not described herein. For example, the RLC layer may use an RLNC mechanism. First, the original data packet is equally divided into M code blocks, and all the M code blocks may be considered as segment packets corresponding to the first sequence number. Then, random linear coding is performed on the M code blocks to generate the K encoded data packets, where values of M and K may be preconfigured by a network, or may be determined by an RLC entity of a transmitting end. This is not limited in this application.

In the part 420, optionally, each encoded data packet of the K encoded data packets corresponds to one index (index) value, and the index value may be allocated by the RLC layer. The index value is used to identify a specific encoded data packet of a group of encoded data packets corresponding to a sequence number (sequence number, SN). For example, index values of the group of K encoded data packets may be 0, 1, 2, ..., K-1, or 1, 2, 3, ..., K in sequence. A specific manner of setting the index value is not limited in this application.

Optionally, as shown in FIG. 4, the method 400 may further include a part 430 and a part 440.

Part 430: Add a packet header to one encoded data packet of the K encoded data packets at the first protocol layer to generate a second protocol data unit, where the packet header of the second protocol data unit includes the first sequence number and a first index value; and send the second protocol data unit to a second communication apparatus.

In the part 430, in a possible implementation of adding the packet header to one encoded data packet of the K encoded data packets at the first protocol layer to generate the second protocol data unit, the RLC entity adds an RLC packet header to each encoded data packet at the RLC layer, to generate a corresponding second protocol data unit, where the second protocol data unit is an RLC PDU.

In the part 430, optionally, when the RLC entity is an AM RLC entity, compared with an existing RLC PDU format, the RLC entity adds an index value field to the RLC packet header, and fills in an index value corresponding to the encoded data packet.

In the part 430, optionally, the packet header of the second protocol data unit further includes a segmentation information (segmentation information, SI) field. The segmentation information indicates segmentation information of an encoded data packet corresponding to the first sequence number and the index value. In other words, one second protocol data unit may include one complete encoded data packet, or include some segments of one encoded data packet. Optionally, the segmentation information may indicate one of the following cases:
the second protocol data unit includes an entire encoded data packet that corresponds to the first index value and that is of the K encoded data packets; or
the second protocol data unit includes a first segment of an encoded data packet that corresponds to the first index value and that is of the K encoded data packets; or
the second protocol data unit includes a last segment of an encoded data packet that corresponds to the first index value and that is of the K encoded data packets; or
the second protocol data unit includes a middle segment of an encoded data packet that corresponds to the first index value and that is of the K encoded data packets.

Correspondingly, a value and a meaning of the segmentation information is described in the following Table 1. It may be understood that values in Table 1 are merely examples, and a specific value is not limited in this application.

**Table 1**

| SI value | Meaning |
|---|---|
| Value 1 (for example, 00) | The second protocol data unit includes an entire encoded data packet that corresponds to the first index value and that is of the K encoded data packets |
| Value 2 (for example, 01) | The second protocol data unit includes a first segment of an encoded data packet that corresponds to the first index value and that is of the K encoded data packets |
| Value 3 (for example, 10) | The second protocol data unit includes a last segment of an encoded data packet that corresponds to the first index value and that is of the K encoded data packets |
| Value 4 (for example, 11) | The second protocol data unit includes a middle segment of an encoded data packet that corresponds to the first index value and that is of the K encoded data packets |

Part 440: Receive an RLC status report from a second communication device, where the RLC status report includes indication information, and the indication information indicates a receiving status of the encoded data packet corresponding to the first sequence number and the first index value; and
when the indication information indicates that the encoded data packet corresponding to the first index value is not successfully received, retransmit the encoded data packet corresponding to the first sequence number and the first index value.

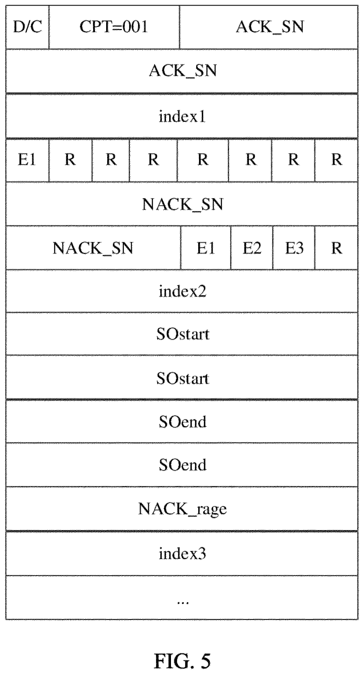

In the part 440, in a possible implementation of receiving the RLC status report from the second communication device, the RLC status report is generated by an RLC entity of the second communication device, and indicates the receiving status of the encoded data packet corresponding to the first sequence number and the first index value of the second communication device. The indication of the receiving status may be that an index value field is introduced into the RLC status report, and indicates the receiving status of the encoded packet corresponding to the index value. If a CPT field in the RLC status report indicates a function of the RLC of controlling the PDU, the CPT corresponding to the RLC status report is 000, and other values of the CPT field are reserved. A new field value may be introduced to the CPT field. For example, as shown in FIG. 5, a value of the CPT is set to 001, indicating an RLC status report carrying a first index value field. Each field related to the sequence number in the status report is associated with one index value field. For example, as shown in FIG. 5, index1 associated with ACK_SN+ indicates a sequence number and index value information of a next encoded data packet that is not received but that is not indicated to be lost in the current status report, and index2 associated with NACK_SN+ indicates a sequence number and index value information that correspond to a lost encoded data packet or a lost segment of an encoded data packet. An index value associated with NACK_range+ indicates that parts of all encoded data packets from an (index2)^{th} encoded data packet corresponding to NACK_SN before SN= (if an SOstart field exists, it indicates starting from an (SOstart)^{th} byte of the encoded data packet) to an (index3)^{th} encoded data packet corresponding to SN=NACK_SN+NACK_range-1 (if an SOend field exists, it indicates ending with an (SOend)^{th} byte of the encoded data packet) are not successfully received. After receiving such an RLC status report, a transmitting end of the first communication device may retransmit an encoded data packet that is not received or a segment of an encoded data packet that is not received.

In the part 440, in a possible implementation of retransmitting the encoded data packet corresponding to the first sequence number and the first index value, when an encoded data packet is not successfully received, the second communication apparatus feeds back index value information of the encoded data packet to the first communication apparatus. The first communication apparatus may learn, based on the first sequence number and the first index value, that the corresponding encoded data packet is not successfully received, and retransmit the encoded data packet corresponding to the first sequence number and the first index value to the second communication apparatus.

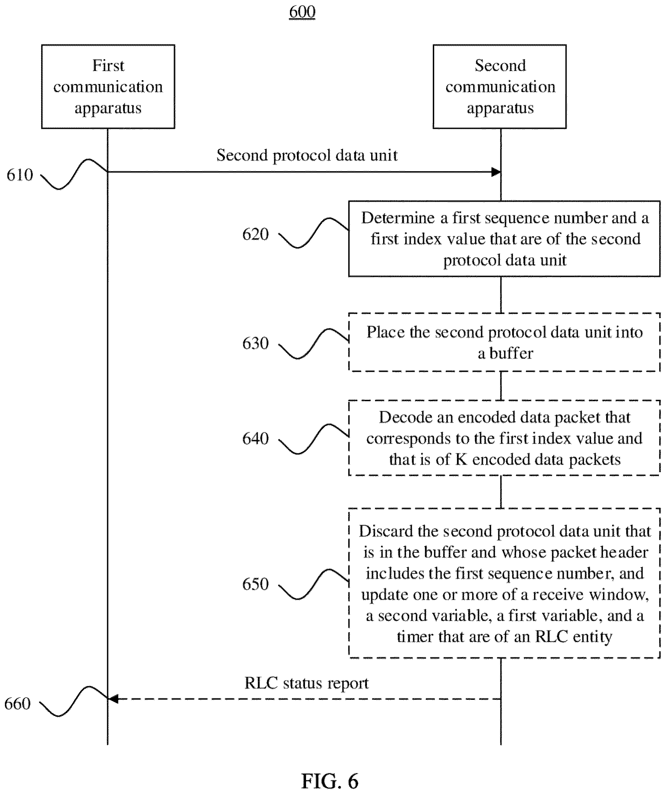

FIG. 6 is a schematic flowchart of a communication method 600 according to an embodiment of this application. The method is performed by a second communication apparatus. The second communication apparatus may be a terminal (for example, an XR terminal), or may be a chip, a chip system, a processor, or the like that supports the terminal in implementing the method. Alternatively, the second communication apparatus may be a network device (for example, a core network device, an access network device, a Wi-Fi router, or a Wi-Fi access point), or may be a chip, a chip system, a processor, or the like that supports the network device in implementing the method. A receiving device may be a server (for example, a cloud server), or may be a chip, a chip system, a processor, or the like that supports the server in implementing the method. As shown in FIG. 6, the method 600 in this embodiment may include a part 610 and a part 620.

Part 610: Receive, at a first protocol layer, a second protocol data unit from a first communication apparatus.

In embodiments of this application, the first protocol layer may be an RLC layer, and the second protocol data unit may be an RLC PDU. An original data packet may be a data packet obtained after the RLC layer performs aggregation (also referred to as cascading) and/or segmentation based on an SDU or a PDU of a PDCP layer, or may be an SDU or a PDU.

Part 620: Determine a first sequence number and a first index value that are of the second protocol data unit, where the second protocol data unit corresponds to an encoded data packet that corresponds to the first index value and that is of K encoded data packets corresponding to the first sequence number.

In embodiments of this application, the first sequence number corresponding to the original data packet may be a sequence number allocated by the RLC layer to the original data packet after the RLC layer obtains the original data packet. Different original data packets may be distinguished by using different sequence numbers.

Optionally, as shown in FIG. 6, the method 600 may further include a part 630, a part 640, a part 650, and a part 660.

Part 630: When the first sequence number falls within a receive window of an RLC entity, or the first sequence number is greater than or equal to a value of a first variable of the RLC entity, place the second protocol data unit into a buffer.

In an implementation of the part 630, the RLC entity is an AM RLC entity. If the first sequence number carried in the second protocol data unit falls within the window, or the second protocol data unit is not received, the AM RLC entity places the second protocol data unit into a receiving buffer. Optionally, if the first sequence number carried in the second protocol data unit falls outside the window, or the second protocol data unit is received, the AM RLC entity discards the second protocol data unit.

In another implementation of the part 630, the RLC entity is an UM RLC entity. If the first sequence number carried in the second protocol data unit falls within the window, or the first sequence number is greater than or equal to the value of the first variable (for example, RX_Next_Reassembly) of the RLC entity (namely, SN≥RX_Next_Reassembly), the UM RLC entity places the second protocol data unit into the receiving buffer. Optionally, if the first sequence number carried in the second protocol data unit falls outside the window, or the first sequence number is less than the value of the first variable of the RLC entity (namely, SN<RX_Next_Reassembly), the UM RLC entity discards the second protocol data unit.

Part 640: Decode the encoded data packet that corresponds to the first index value and that is of the K encoded data packets.

In an implementation of the part 640, a packet header of the second protocol data unit further includes segmentation information. When the segmentation information indicates that the second protocol data unit includes all parts of the encoded data packet that corresponds to the first index value and that is of the K encoded data packets, the encoded data packet that corresponds to the first index value and that is of the K encoded data packets is decoded. Optionally, if all parts of the encoded data packet that corresponds to the first index value and that is of the K encoded data packets cannot be decoded, the data packet is considered as processed.

In another implementation of the part 640, a packet header of the second protocol data unit further includes segmentation information. When the segmentation information indicates that the second protocol data unit includes one segment of the encoded data packet that corresponds to the first index value and that is of the K encoded data packets, the encoded data packet that corresponds to the first index value and that is of the K encoded data packets is reassembled to obtain a complete encoded data packet and perform decoding. Optionally, if the segmented encoded data packet cannot be reassembled with another segmented encoded data packet, the encoded data packet is considered as processed. Optionally, if the reassembled encoded data packet cannot be decoded, the data packet is considered as processed. Optionally, if the segmented encoded data packet cannot be reassembled with another segmented encoded data packet, the encoded data packet is considered as processed.

Part 650: When the original data packet corresponding to the first sequence number is successfully decoded, discard the second protocol data unit that is in the buffer and whose packet header includes the first sequence number, and update one or more of the receive window, a second variable, the first variable, and a timer that are of the RLC entity.

In the part 650, in an implementation of discarding the second protocol data unit that is in the buffer and whose packet header includes the first sequence number, the RLC entity is the AM RLC entity. If encoded data packets corresponding to the first sequence number are successfully decoded, the second communication apparatus considers that all encoded data packets corresponding to the first sequence number are received, or that remaining encoded data packets that are not received do not need to be received. Subsequently, when the encoded data packet corresponding to the first sequence number is received, the encoded data packet may be directly discarded.

Optionally, in the part 650, the updating a second variable (for example, RX_Next) of the RLC entity includes: updating the second variable of the RLC entity to a second sequence number corresponding to a next to-be-decoded data packet, where the second sequence number is different from the first sequence number. Optionally, the AM RLC entity updates a variable or a timer maintained by the AM RLC entity. For example, when the first sequence number is equal to the second variable (namely, SN=RX_Next), and when the encoded data packets corresponding to the first sequence number are successfully decoded, the AM RLC entity updates the second variable to the second sequence number corresponding to the to-be-decoded data packet.

Part 660: Feed back an RLC status report to a first communication device, where the RLC status report includes an indication field, and the indication field indicates a receiving status of the encoded data packet corresponding to the first sequence number and the first index value. Optionally, content and a carrying manner of the RLC status report are the same as those in the part 440. Details are not described herein again.

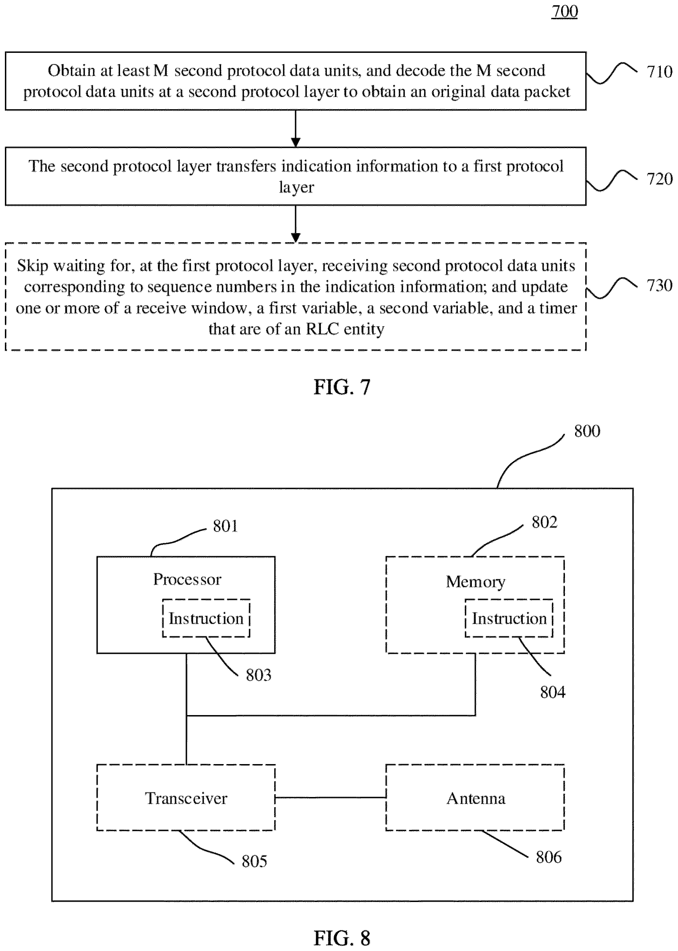

FIG. 7 is a schematic flowchart of a communication method 700 according to an embodiment of this application. The method is performed by a second communication apparatus. As shown in FIG. 7, the method 700 in this embodiment may include a part 710 and a part 720.

Part 710: Obtain at least M complete second protocol data units, and decode the M complete second protocol data units at a second protocol layer to obtain an original data packet, where a total quantity of second protocol data units obtained by performing network coding on the original data packet is K, K and M are positive integers, and K≥M.

Part 720: The second protocol layer transfers indication information to a first protocol layer, where the indication information includes a sequence number range of the K second protocol data units or sequence numbers corresponding to some second protocol data units of the K second protocol data units.

In embodiments of this application, for the original data packet, a first communication apparatus may perform a network coding function at a PDCP layer or a specially introduced network coding layer, and the second communication apparatus correspondingly performs decoding at the PDCP layer or the network coding layer. The original data packet may be a data packet obtained after aggregation and/or segmentation are/is performed based on an SDU or a PDU of the PDCP layer, or may be an SDU or a PDU. The PDCP layer or the network coding layer processes the original data packet before encoding, generates a group of K encoded data packets, and submits the group of K encoded data packets to an RLC entity of the first communication apparatus for processing. Then, the first communication apparatus receives the K second protocol data units at the RLC layer, where the second protocol data units are RLC SDUs, and sends the K second protocol data units to the second communication apparatus.

In the method 700, optionally, the first protocol layer is an RLC layer, and the second protocol layer is a PDCP layer or a network coding layer.

In the part 710, in an implementation of obtaining the at least M complete second protocol data units, the second communication apparatus receives complete second protocol data units at the first protocol layer and submits the complete second protocol data units to the second protocol layer. If a segmented second protocol data unit is received, the second communication apparatus waits for the second protocol data unit to be reassembled to a complete second protocol data unit and then submits the complete second protocol data unit to the second protocol layer.

In the part 720, in an implementation in which the second protocol layer transfers the indication information to the first protocol layer, the second protocol layer indicates, to the first protocol layer, that there is no need to wait for transmitting some second protocol data units. For example, a PDCP entity of the first communication apparatus sends a group of K=6 encoded data packets, and a PDCP entity of the second communication apparatus successfully receives four of the encoded data packets and obtains an original data packet through decoding. In this case, the PDCP entity of the second communication apparatus does not need to receive remaining two encoded data packets, and may indicate the first protocol layer not to wait for second protocol data units corresponding to the two encoded data packets.

Optionally, as shown in FIG. 7, the method 700 may further include a part 730.

Part 730: Skip waiting for, at the first protocol layer, receiving the second protocol data units corresponding to the sequence numbers in the indication information; and
update one or more of a receive window, a second variable, a first variable, and a timer that are of an RLC entity.

In the part 730, in an implementation of not waiting for, at the first protocol layer, receiving the second protocol data units corresponding to the sequence numbers in the indication information, the second protocol layer indicates, to the first protocol layer, that a second protocol data unit corresponding to a sequence number (for example, an RLC SN) of a specific second protocol data unit or a sequence number range of a specific second protocol data unit is no longer needed. For example, if second protocol data units with sequence numbers 1 to 6 correspond to a group of encoded data packets, and a second communication apparatus successfully receives four complete encoded packets (for example, with SNs 1, 3, 4, and 6) and obtains an original data packet through decoding, the second protocol layer may indicate, to the first protocol layer, that second protocol data units with RLC SNs in a range of 1 to 6 no longer need to be received, or the second protocol layer may indicate, to the first protocol layer, that second protocol data units with RLC SNs 2 and 5 no longer need to be received. Optionally, when the first protocol layer learns that the encoded data packets with the RLC SNs 1 to 6 belong to a same original data packet, the second protocol layer may indicate that the RLC SN of the second protocol data unit at the first protocol layer is any one of the RLC SNs 1 to 6, indicating that the second protocol data units with the RLC SNs 1 to 6 do not need to be waited for receiving. It may be understood that a specific indication manner is not limited in this application.

Optionally, an entity of the second protocol layer may determine, in the following manner, an RLC SN corresponding to one encoded data packet or an RLC SN range corresponding to one group of encoded data packets: The encoded data packet carries an RLC SN of the encoded data packet in the group of encoded data packets. The first protocol layer synchronously indicates a corresponding RLC SN when submitting the second protocol data unit to the second protocol layer. If the second protocol layer determines that one second protocol data unit (for example, SN=A) corresponds to a B^{th} encoded data packet in a group of K encoded data packets, it may be determined that an RLC SN range corresponding to the group of K encoded data packets is B-A+1 to B-A+K, or it may be determined that an RLC SN corresponding to a C^{th} encoded data packet in the group is B-A+C. Optionally, to avoid that an RLC SN that corresponds to an encoded data packet and that is calculated by the second communication apparatus at the second protocol layer is inaccurate due to transmission of a PDU controlled by the second protocol layer, the PDCP entity of the first communication apparatus may be constrained to avoid sending the PDU controlled by the second protocol layer in the middle of a group of encoded data packets. In this way, it can be ensured that RLC SNs of second protocol data units corresponding to the group of K encoded data packets are consecutive.

In the part 730, in an implementation of updating one or more of the receive window, the second variable, the first variable, and the timer that are of the RLC entity, the first protocol layer obtains, based on indication of the second protocol layer, that all corresponding second protocol data units are received. Therefore, the RLC entity of the first protocol layer updates a variable or a timer maintained by the RLC entity. For example, if the first protocol layer obtains, based on the indication of the second protocol layer, a sequence number (SN=RX_Next) of a successfully received second protocol data unit, the first protocol layer updates RX_Next to a sequence number corresponding to a next to-be-received second protocol data unit. In addition, when feeding back an RLC status report, the first protocol layer does not need to feed back negative acknowledgment (negative acknowledgment, NACK) information corresponding to the sequence number.

In an implementation of 700, the first protocol layer functions in a distributed unit (distributed unit, DU), and the second protocol layer functions in a central unit (central unit, CU). For example, the second communication apparatus is a base station that uses a CU-DU split architecture, and information exchange between an entity at the second protocol layer and an entity at the first protocol layer needs to be transmitted by using an F1 interface between a CU and a DU. Therefore, a message format supported on an existing interface needs to be enhanced, so that the DU can carry RLC SN information when sending the second protocol data unit to the CU, and the CU indicates, to the DU, that second protocol data units corresponding to specific RLC SNs no longer need to be received.

For example, the DU transmits the second protocol data unit to the CU through a GTP-U tunnel, and the second protocol data unit is encapsulated in a T-PDU part of a GTP-U PDU. The DU may indicate, to the CU, sequence number information corresponding to the second protocol data unit in one of the following manners:

Manner 1: The RLC SN is carried in a GTP-U header. A "Next Extension Header Type" field value is newly introduced to indicate that an extension header with the RLC SN is subsequently included. A corresponding extension header format may be shown in Table 2.

**Table 2a: Extension header in which a length of the RLC SN does not exceed 2 bytes**

| | Bits | | | | | | | |
|---|---|---|---|---|---|---|---|---|
| Octets | 8 | 7 | 6 | 5 | 4 | 3 | 2 | 1 |
| 1 | 0x01 | | | | | | | |
| 2 | RLC SN | | | | | | | |
| 3 | RLC SN | | | | | | | |
| 4 | Next Extension Header Type (indicating whether an extended header exists) | | | | | | | |

**Table 2b: Extension header in which a length of the RLC SN is 18 bits**

| | Bits | | | | | | | |
|---|---|---|---|---|---|---|---|---|
| Octets | 8 | 7 | 6 | 5 | 4 | 3 | 2 | 1 |
| 1 | 0x02 | | | | | | | |
| 2 | Spare | | | | | | RLC SN | |
| 3 | RLC SN | | | | | | | |
| 4 | RLC SN | | | | | | | |
| 5 | Spare | | | | | | | |
| 6 | Spare | | | | | | | |
| 7 | Spare | | | | | | | |
| 8 | Next Extension Header Type (indicating whether an extended header exists) | | | | | | | |

Manner 2: The RLC SN is carried in an NR RAN container. For example, a new field is introduced into an existing user plane protocol frame (for example, a DL DATA DELIVERY STATUS) to indicate the RLC SN. Alternatively, a new user plane protocol frame format, for example, referred to as UL USER DATA, is introduced to transfer an RLC SN value. A format of UL USER DATA may be shown in Table 3, where PDU Type indicates a type of the user plane protocol frame, and RLC SN indication field indicates whether there is an RLC SN field subsequently.

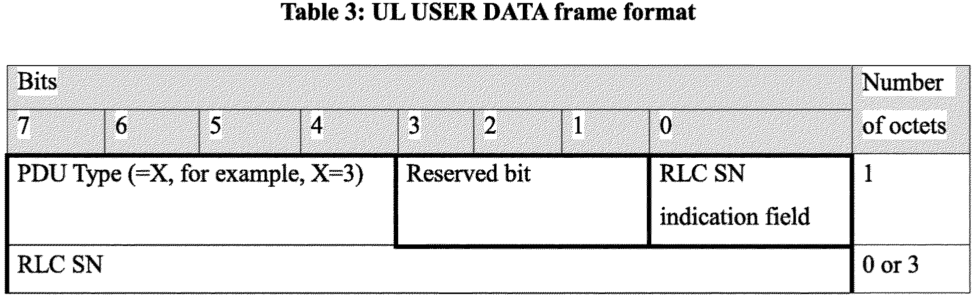

Similarly, the CU indicates, to the DU, second protocol data units corresponding to RLC SNs no longer need to be received, and corresponding information may be carried in the NR RAN container. For example, a new field is introduced in the existing user plane protocol frame (for example, DL USER DATA) to indicate an SN range or SN information of these second protocol data units that are no longer needed, or a new user plane protocol frame format is introduced to transfer an RLC SN range or an SN value. For example, Table 4 is a diagram of a newly introduced user plane protocol frame format. The protocol frame may be referred to as DL RLC SN INDICATION, where PDU Type indicates a type of the user plane protocol frame, RLC SN range indication field indicates whether there is an RLC SN range field subsequently, Number of RLC SN range indicates a quantity of RLC SN ranges carried, and RLC SN Range Start and RLC SN Range Size indicate a start value of an RLC SN range and a size of an RLC SN range.

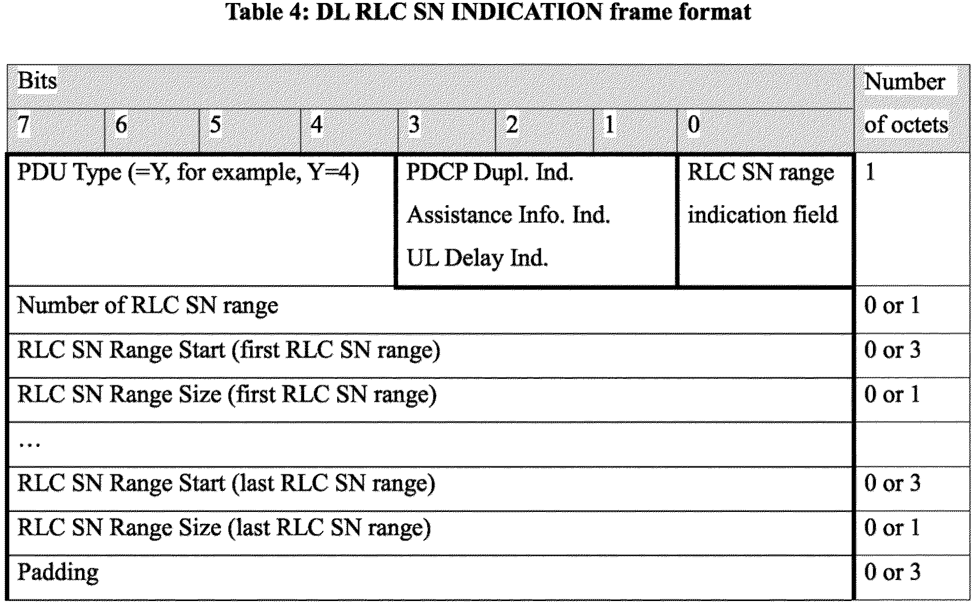

FIG. 8 is a schematic diagram of a structure of an apparatus. The apparatus 800 may be a network device, a terminal device, a server, or a centralized controller, or may be a chip, a chip system, a processor, or the like that supports the network device, the terminal device, the server, or the centralized controller in implementing the foregoing method. The apparatus may be configured to implement the method described in the foregoing method embodiments. For details, refer to the descriptions in the foregoing method embodiments.

The apparatus 800 may include one or more processors 801. The processor 801 may also be referred to as a processing unit, and may implement a specific control function. The processor 801 may be a general-purpose processor, a dedicated processor, or the like. For example, the processor 801 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

In an optional design, the processor 801 may also store instructions and/or data 803. The instructions and/or data 803 may be run by the processor, so that the apparatus 800 performs the methods described in the foregoing method embodiments.

In another optional design, the processor 801 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In another possible design, the apparatus 800 may include a circuit. The circuit may implement sending, receiving, or communication functions in the foregoing method embodiments.

Optionally, the apparatus 800 may include one or more memories 802. The memory stores instructions 804, and the instructions may be run on the processor, so that the apparatus 800 performs a method described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the apparatus 800 may further include a transceiver 805 and/or an antenna 806. The processor 801 may be referred to as a processing unit, and controls the apparatus 800. The transceiver 805 may be referred to as a transceiver unit, a transceiver machine, a transceiver circuit, a transceiver apparatus, a transceiver module, or the like, and is configured to implement sending and receiving functions.

Optionally, the apparatus 800 in this embodiment of this application may be configured to perform the method described in FIG. 4 or FIG. 7 in embodiments of this application.

The processor and the transceiver described in this application may be implemented in an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (N-type Metal-oxide-semiconductor, NMOS), a positive channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiments may be a network device or a terminal device. However, a range of the apparatus described in this application is not limited thereto, and a structure of the apparatus may not be limited to FIG. 8. The apparatus may be an independent device, or may be a part of a larger device. For example, the apparatus may be:
(1) an independent integrated circuit IC, a chip, or a chip system or subsystem;
(2) a set of one or more ICs, where optionally, the IC set may also include a storage component configured to store data and/or instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) another device or the like.

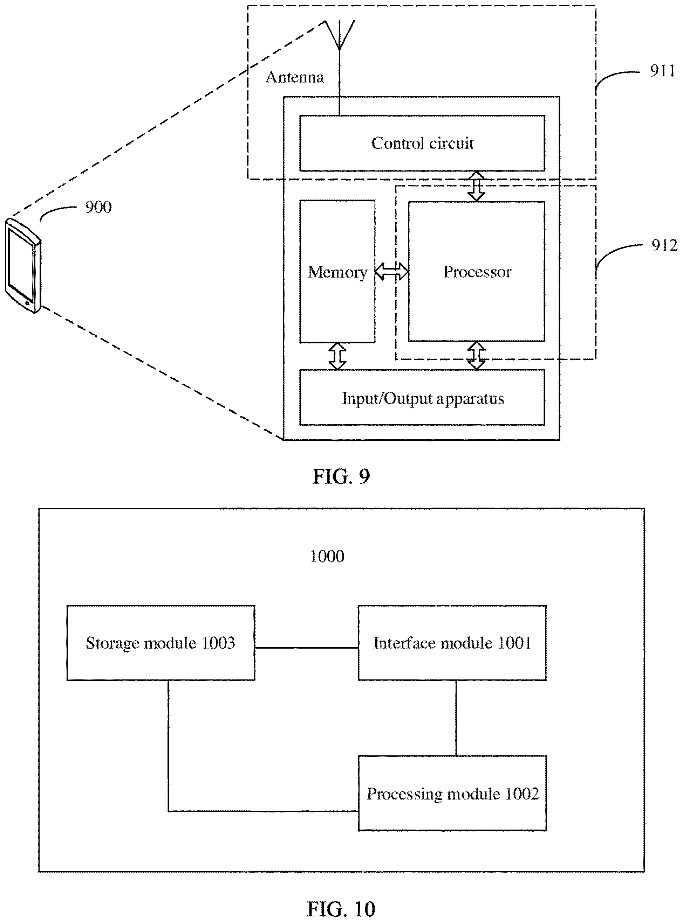

FIG. 9 is a diagram of a structure of a terminal device. The terminal device is applicable to the scenario shown in FIG. 1. For ease of description, FIG. 9 only shows main components of the terminal device. As shown in FIG. 9, the terminal device 900 includes a processor, a memory, a control circuit, an antenna, and an input/output apparatus. The processor is mainly configured to process a communication protocol and communication data, control the entire terminal, execute a software program, and process data of the software program. The memory is mainly configured to store the software program and data. A radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the terminal device is powered on, the processor may read the software program in a storage unit, parse and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form by using the antenna. When data is sent to the terminal device, the radio frequency circuit receives the radio frequency signal by using the antenna. The radio frequency signal is further converted into a baseband signal, and the baseband signal is output to the processor. The processor converts the baseband signal into data, and processes the data.

For ease of description, FIG. 9 shows only one memory and one processor. In an actual terminal device, there may be a plurality of processors and memories. The memory may also be referred to as a storage medium, a storage device, or the like. This is not limited in embodiments of the present invention.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 9 integrates functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be represented as a baseband processing circuit or a baseband processing chip. The central processing unit may also be represented as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have receiving and sending functions may be considered as a transceiver unit 911 of the terminal device 900, and the processor having a processing function may be considered as a processing unit 912 of the terminal device 900. As shown in FIG. 9, the terminal device 900 includes a transceiver unit 911 and a processing unit 912. The transceiver unit may also be referred to as a transceiver device, a transceiver, a transceiver apparatus, or the like. Optionally, a component that is in the transceiver unit 911 and that is configured to implement a receiving function may be considered as a receiving unit, and a component that is in the transceiver unit 911 and that is configured to implement a sending function may be considered as a sending unit. In other words, the transceiver unit 911 includes the receiving unit and the sending unit. For example, the receiving unit may also be referred to as a receiver, a receiver device, a receiving circuit, or the like, and the sending unit may be referred to as a transmitter, a transmitter device, a transmitting circuit, or the like. Optionally, the receiving unit and the sending unit may be one integrated unit, or may be a plurality of independent units. The receiving unit and the sending unit may be at one geographical location, or may be distributed at a plurality of geographical locations.

As shown in FIG. 10, another embodiment of this application provides an apparatus 1000. The apparatus may be a terminal, a network device, a server, or a centralized controller, or may be a component (for example, an integrated circuit or a chip) of the terminal, the network device, the server, or the centralized controller. Alternatively, the apparatus may be another communication module, configured to implement the method in the method embodiments of this application. The apparatus 1000 may include a processing module 1002 (or referred to as a processing unit). Optionally, the apparatus 1000 may further include an interface module 1001 (or referred to as a transceiver unit or a transceiver module) and a storage module 1003 (or referred to as a storage unit). The interface module 1001 is configured to communicate with another device. The interface module 1001 may be, for example, a transceiver module or an input/output module.

In a possible design, one or more modules in FIG. 10 may be implemented by one or more processors, or may be implemented by one or more processors and memories, or may be implemented by one or more processors and transceivers, or may be implemented by one or more processors, memories, and transceivers. This is not limited in embodiments of this application. The processor, the memory, and the transceiver may be disposed separately, or may be integrated.

The apparatus has a function of implementing the terminal described in embodiments of this application. For example, the apparatus includes a corresponding module, unit, or means (means) used for the terminal to perform the steps that are related to the terminal and that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiments. Alternatively, the apparatus has a function of implementing the network device described in embodiments of this application. For example, the apparatus includes a corresponding module, unit, or means (means) used for the network device to perform the steps that are related to the network device and that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiments.

The apparatus has a function of implementing the terminal described in embodiments of this application. For example, the apparatus includes a corresponding module, unit, or means (means) used for the terminal to perform the steps that are related to the terminal and that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiments. Alternatively, the apparatus has a function of implementing the network device described in embodiments of this application. For example, the apparatus includes a corresponding module, unit, or means (means) used for the network device to perform the steps that are related to the network device and that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiments.

Optionally, the modules in the apparatus 1000 in this embodiment of this application may be configured to perform the method described in FIG. 4 in embodiments of this application.

In a possible design, the apparatus 1000 may include a processing module 1002 and an interface module 1001. The processing module 1002 is configured to obtain an original data packet at a first protocol layer, where the original data packet corresponds to a first sequence number, and the original data packet is from a first protocol data unit at a second protocol layer; and the processing module 1002 is further configured to perform network coding on the original data packet at the first protocol layer to obtain K encoded data packets, where each encoded data packet of the K encoded data packets corresponds to one index value, and K is a positive integer.

In some possible implementations of the apparatus 1000, the processing module 1002 is further configured to add, at the first protocol layer, a packet header to one encoded data packet of the K encoded data packets to generate a second protocol data unit, where the packet header of the second protocol data unit includes the first sequence number and a first index value. The interface module 1001 is configured to send the second protocol data unit to a second communication apparatus.

In some possible implementations of the apparatus 1000, the packet header of the second protocol data unit further includes segmentation information, and the segmentation information indicates one of the following cases:
the second protocol data unit includes an entire encoded data packet that corresponds to the first index value and that is of the K encoded data packets; or
the second protocol data unit includes a first segment of an encoded data packet that corresponds to the first index value and that is of the K encoded data packets; or
the second protocol data unit includes a last segment of an encoded data packet that corresponds to the first index value and that is of the K encoded data packets; or
the second protocol data unit includes a middle segment of an encoded data packet that corresponds to the first index value and that is of the K encoded data packets.

In some possible implementations of the apparatus 1000, the implementation further includes:

The interface module 1001 is further configured to receive an RLC status report from a second communication device, where the RLC status report includes indication information, and the indication information indicates a receiving status of the encoded data packet corresponding to the first sequence number and the first index value. The processing module 1002 is further configured to: when the indication information indicates that the encoded data packet corresponding to the first sequence number and the first index value is not successfully received, retransmit the encoded data packet corresponding to the first sequence number and the first index value.

In some possible implementations of the apparatus 1000, the first protocol layer is an RLC layer, and the second protocol layer is a PDCP layer or a network coding layer.

Optionally, the modules in the apparatus 1000 in this embodiment of this application may be further configured to perform the method described in FIG. 6 in embodiments of this application.

In a possible design, the apparatus 1000 may include a processing module 1002 and an interface module 1001. The interface module 1001 is configured to receive, at a first protocol layer, a second protocol data unit from a first communication apparatus. The processing module 1002 is configured to determine a first sequence number and a first index value that are of the second protocol data unit, where the second protocol data unit corresponds to an encoded data packet that corresponds to the first index value and that is of K encoded data packets corresponding to the first sequence number.

In some possible implementations of the apparatus 1000, the implementation further includes:

The interface module 1001 is further configured to: when the first sequence number falls within a receive window of an RLC entity, or the first sequence number is greater than or equal to a value of a first variable of the RLC entity, place the second protocol data unit into a buffer.

In some possible implementations of the apparatus 1000, the implementation further includes:

A packet header of the second protocol data unit further includes segmentation information. The processing module 1002 is further configured to: when the segmentation information indicates that the second protocol data unit includes all parts of the encoded data packet that corresponds to the first index value and that is of the K encoded data packets, decode the encoded data packet that corresponds to the first index value and that is of the K encoded data packets to obtain an original data packet.

In some possible implementations of the apparatus 1000, the implementation further includes:

A packet header of the second protocol data unit further includes segmentation information. The processing module 1002 is further configured to: when the segmentation information indicates that the second protocol data unit includes one segment of the encoded data packet that corresponds to the first index value and that is of the K encoded data packets, reassemble the encoded data packet that corresponds to the first index value and that is of the K encoded data packets to obtain a complete encoded data packet, and perform decoding to obtain an original data packet.

In some possible implementations of the apparatus 1000, the implementation further includes:

The processing module 1002 is further configured to: when the first sequence number falls outside a receive window of an RLC entity, or the first sequence number is less than a value of a first variable of the RLC entity, or the second protocol data unit is received, discard the second protocol data unit.

In some possible implementations of the apparatus 1000, the implementation further includes:

The processing module 1002 is further configured to: when the original data packet corresponding to the first sequence number is successfully decoded, discard the second protocol data unit that is in the buffer and whose packet header includes the first sequence number, and update one or more of the receive window, a second variable, the first variable, and a timer that are of the RLC entity.

In some possible implementations of the apparatus 1000, that the processing module 1002 is further configured to update a second variable of the RLC entity includes:

The processing module 1002 is further configured to update the second variable of the RLC entity to a second sequence number corresponding to a next to-be-decoded data packet, where the second sequence number is different from the first sequence number.

In some possible implementations of the apparatus 1000, the implementation further includes:

The interface module 1001 is further configured to feed back an RLC status report to a first communication device, where the RLC status report includes an indication field, and the indication field indicates a receiving status of the encoded data packet corresponding to the first sequence number and the first index value.

In some possible implementations of the apparatus 1000, the first protocol layer is an RLC layer.

Optionally, the modules in the apparatus 1000 in this embodiment of this application may be further configured to perform the method described in FIG. 7 in embodiments of this application.

In a possible design, the apparatus 1000 may include a processing module 1002 and an interface module 1001. The interface module 1001 is configured to obtain at least M second protocol data units. The processing module 1002 is configured to decode the M second protocol data units at a second protocol layer to obtain an original data packet, where a total quantity of second protocol data units obtained by performing network coding on the original data packet is K, K and M are positive integers, and K≥M. The processing module 1002 is further configured to transfer, at the second protocol layer, indication information to a first protocol layer, where the indication information includes a sequence number range of the K second protocol data units or sequence numbers corresponding to some second protocol data units of the K second protocol data units.

In some possible implementations of the apparatus 1000, the implementation further includes:

The processing module 1002 is further configured to not to wait for, at the first protocol layer, receiving the second protocol data units corresponding to the sequence numbers in the indication information, and update one or more of a receive window, a first variable, a second variable, and a timer that are of the RLC entity.

In some possible implementations of the apparatus 1000, the first protocol layer is an RLC layer, and the second protocol layer is a PDCP layer or a network coding layer.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features are combined with other features based on requirements. Correspondingly, the apparatus provided in embodiments of this application may also correspondingly implement these features or functions. Details are not described herein.

A person skilled in the art may further understand that various illustrative logical blocks (illustrative logical blocks) and steps (steps) that are listed in embodiments of this application may be implemented by electronic hardware, computer software, or a combination thereof. Whether the functions are implemented by using hardware or software depends on particular applications and a design requirement of the entire system. A person skilled in the art may use various methods to implement the functions for corresponding applications, but it should not be considered that the implementation goes beyond the protection scope of embodiments of this application.

It may be understood that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, or a discrete hardware component.

The solutions described in this application may be implemented in various manners. For example, the technologies may be implemented by hardware, software, or a combination thereof. For hardware implementation, a processing unit configured to perform these technologies at a communication apparatus may be implemented in one or more general-purpose processors, a DSP, a digital signal processing device, an ASIC, a programmable logic device, an FPGA or another programmable logic apparatus, a discrete gate or transistor logic, a discrete hardware component, or any combination thereof. The general-purpose processor may be a microprocessor. The processor may also be implemented by a combination of computing apparatuses, such as a digital signal processor and a microprocessor, a plurality of microprocessors, one or more microprocessors combined with a digital signal processor core, or any other similar configuration.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of the solutions described in the foregoing embodiments may be implemented through software, hardware, firmware, or any combination thereof. When software is used for implementation, all or some of the solutions may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device like a server or a data center integrated with one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state disk, SSD)), or the like.

It may be understood that an "embodiment" used throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner. It may be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

It may be understood that, in this application, "when", "if', and "in case of" all mean that an apparatus performs corresponding processing in an objective case, are not intended to limit time, does not require the apparatus to necessarily have a determining action during implementation, and do not mean that there is another limitation.

"At the same time" in this application may be understood as being at a same time point, or may be understood as being within a time period, or may be understood as being within a same period, and may be specifically understood with reference to a context.

A person skilled in the art may understand that various numbers such as first and second in this application are merely used for differentiation for ease of description, and are not used to limit the scope of embodiments of this application. A specific value of a number (which may also be referred to as an index), a specific value of a quantity, and a location in this application are merely used as examples, but are not unique representation forms, and are not used to limit the scope of embodiments of this application. Various numbers such as first and second in this application are merely used for differentiation for ease of description, and are not used to limit the scope of embodiments of this application.

In this application, an element represented in a singular form is intended to represent "one or more", but does not represent "one and only one", unless otherwise specified. In this application, unless otherwise specified, "at least one" is intended to represent "one or more", and "a plurality of" is intended to represent "two or more".

In addition, the terms "system" and "network" may be used interchangeably in this specification. The term "and/or" in this specification describes only an association relationship between associated objects and represents that three relationships may exist. For example, A and/or B may represent the following three cases: Only A exists, both A and B exist, and only B exists. A may be singular or plural, and B may be singular or plural. A character "/" usually indicates an "or" relationship between the associated objects.

The term "at least one of" in this specification indicates all combinations or any combination of listed items. For example, "at least one of A, B, and C" may indicate the following six cases: only A exists, only B exists, only C exists, A and B coexist, B and C coexist, and A, B, and C coexist. A may be singular or plural, B may be singular or plural, and C may be singular or plural.

It should be understood that in embodiments of this application, "B corresponding to A" represents that B is associated with A, and B may be determined based on A. However, it should be further understood that determining B based on A does not mean that B is determined based only on A. B may alternatively be determined based on A and/or other information.

"Predefine" in this application may be understood as "define", "predefine", "store", "pre-store", "pre-negotiate", "pre-configure", "solidify", or "pre-burn".

A person of ordinary skill in the art may understand that units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and methods described in this application may alternatively be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

For same or similar parts in embodiments of this application, refer to each other. In embodiments of this application and the implementations/implementation methods in embodiments, unless otherwise specified or a logical collision occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship of the technical features. The foregoing implementations of this application do not constitute a limitation on the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A data transmission method, wherein the method is applied to a first communication apparatus, and the method comprises:
obtaining an original data packet at a first protocol layer, wherein the original data packet corresponds to a first sequence number, and the original data packet is from a first protocol data unit at a second protocol layer; and
performing network coding on the original data packet at the first protocol layer to obtain K encoded data packets, wherein each encoded data packet of the K encoded data packets corresponds to one index value, and K is a positive integer.

2. The method according to claim 1, wherein the method further comprises:
adding, at the first protocol layer, a packet header to one encoded data packet of the K encoded data packets to generate a second protocol data unit, wherein the packet header of the second protocol data unit comprises the first sequence number and a first index value; and
sending the second protocol data unit to a second communication apparatus.

3. The method according to claim 2, wherein the packet header of the second protocol data unit further comprises segmentation information, and the segmentation information indicates one of the following cases:
the second protocol data unit comprises an entire encoded data packet that corresponds to the first index value and that is of the K encoded data packets; or
the second protocol data unit comprises a first segment of an encoded data packet that corresponds to the first index value and that is of the K encoded data packets; or
the second protocol data unit comprises a last segment of an encoded data packet that corresponds to the first index value and that is of the K encoded data packets; or
the second protocol data unit comprises a middle segment of an encoded data packet that corresponds to the first index value and that is of the K encoded data packets.

4. The method according to any one of claims 1 to 3, wherein the method further comprises:
receiving an radio link control RLC status report from a second communication device, wherein the RLC status report comprises indication information, and the indication information indicates a receiving status of the encoded data packet corresponding to the first sequence number and the first index value; and
when the indication information indicates that the encoded data packet corresponding to the first sequence number and the first index value is not successfully received, retransmitting the encoded data packet corresponding to the first sequence number and the first index value.

5. The method according to any one of claims 1 to 4, wherein the first protocol layer is an RLC layer, and the second protocol layer is a packet data convergence protocol PDCP layer or a network coding layer.

6. A data transmission method, wherein the method is applied to a second communication apparatus, and the method comprises:
receiving, at a first protocol layer, a second protocol data unit from a first communication apparatus; and
determining a first sequence number and a first index value that are of the second protocol data unit, wherein the second protocol data unit corresponds to an encoded data packet that corresponds to the first index value and that is of K encoded data packets corresponding to the first sequence number.

7. The method according to claim 6, wherein the method further comprises:
when the first sequence number falls within a receive window of an radio link control RLC entity, or the first sequence number is greater than or equal to a value of a first variable of the RLC entity, placing the second protocol data unit into a buffer.

8. The method according to claim 7, wherein the method further comprises:
a packet header of the second protocol data unit comprises segmentation information; and
when the segmentation information indicates that the second protocol data unit comprises all parts of the encoded data packet that corresponds to the first index value and that is of the K encoded data packets, the method further comprises:
decoding the encoded data packet that corresponds to the first index value and that is of the K encoded data packets to obtain an original data packet.

9. The method according to claim 7, wherein the method further comprises:
a packet header of the second protocol data unit comprises segmentation information; and
when the segmentation information indicates that the second protocol data unit comprises one segment of the encoded data packet that corresponds to the first index value and that is of the K encoded data packets, the method further comprises:
reassembling the encoded data packet that corresponds to the first index value and that is of the K encoded data packets to obtain a complete encoded data packet, and performing decoding to obtain an original data packet.

10. The method according to claim 6, wherein the method further comprises:
when the first sequence number falls outside a receive window of an RLC entity, or the first sequence number is less than a value of a first variable of the RLC entity, or the second protocol data unit is received, discarding the second protocol data unit.

11. The method according to claim 8 or 9, wherein the method further comprises:
when the original data packet corresponding to the first sequence number is successfully decoded, discarding the second protocol data unit that is in the buffer and whose packet header comprises the first sequence number, and updating one or more of the receive window, a second variable, the first variable, and a timer that are of the RLC entity.

12. The method according to claim 11, wherein the updating a second variable of the RLC entity comprises:
updating the second variable of the RLC entity to a second sequence number corresponding to a next to-be-decoded data packet, wherein the second sequence number is different from the first sequence number.

13. The method according to any one of claims 6 to 12, wherein the method further comprises:
feeding back an RLC status report to a first communication device, wherein the RLC status report comprises an indication field, and the indication field indicates a receiving status of the encoded data packet corresponding to the first sequence number and the first index value.

14. The method according to any one of claims 6 to 13, wherein the first protocol layer is an RLC layer.

15. A data transmission method, wherein the method is applied to a second communication apparatus, and the method comprises:
obtaining at least M second protocol data units, and decoding the M second protocol data units at a second protocol layer to obtain an original data packet, wherein a total quantity of second protocol data units obtained by performing network coding on the original data packet is K, K and M are positive integers, and K≥M; and
transferring, by the second protocol layer, indication information to a first protocol layer, wherein the indication information comprises a sequence number range of the K second protocol data units or sequence numbers corresponding to some second protocol data units of the K second protocol data units.

16. The method according to claim 15, wherein the method comprises:
skipping, at the first protocol layer, waiting for receiving the second protocol data units corresponding to the sequence numbers in the indication information; and
updating one or more of a receive window, a first variable, a second variable, and a timer that are of an radio link control RLC entity.

17. The method according to claim 15 or 16, wherein the first protocol layer is an RLC layer, and the second protocol layer is a packet data convergence protocol PDCP layer or a network coding layer.

18. A communication apparatus, comprising a processing module, wherein
the processing module is configured to obtain an original data packet at a first protocol layer, wherein the original data packet corresponds to a first sequence number, and the original data packet is from a first protocol data unit at a second protocol layer; and
the processing module is further configured to perform network coding on the original data packet at the first protocol layer to obtain K encoded data packets, wherein each encoded data packet of the K encoded data packets corresponds to one index value, and K is a positive integer.

19. A communication apparatus, comprising a processing module and an interface module, wherein
the interface module is configured to receive, at a first protocol layer, a second protocol data unit from a first communication apparatus; and
the processing module is configured to determine a first sequence number and a first index value that are of the second protocol data unit, wherein the second protocol data unit corresponds to an encoded data packet that corresponds to the first index value and that is of K encoded data packets corresponding to the first sequence number.

20. A communication apparatus, comprising a processing module and an interface module, wherein
the interface module is configured to obtain at least M second protocol data units;
the processing module is configured to decode the M second protocol data units at a second protocol layer to obtain an original data packet, wherein a total quantity of second protocol data units obtained by performing network coding on the original data packet is K, K and M are positive integers, and K≥M; and
the processing module is further configured to transfer, at the second protocol layer, indication information to a first protocol layer, wherein the indication information comprises a sequence number range of the K second protocol data units or sequence numbers corresponding to some second protocol data units of the K second protocol data units.

21. A communication apparatus, comprising a processor, wherein the processor is coupled to a memory, the memory is configured to store a program or instructions, and when the program or the instructions is/are executed by the processor, the apparatus is enabled to perform the method according to any one of claims 1 to 5, claims 6 to 14, or claims 15 to 17.

22. A computer-readable storage medium, storing a computer program or instructions, wherein when the computer program or the instructions is/are executed, a computer is enabled to perform the method according to any one of claims 1 to 5, claims 6 to 14, or claims 15 to 17.

23. A computer program product comprising instructions, wherein when the computer program product runs on a computer, the computer is enabled to perform the method according to any one of claims 1 to 5, claims 6 to 14, or claims 15 to 17.

24. A communication system, comprising the apparatus according to claim 18 and the apparatus according to claim 19.
